# FASCICULE DE BREVET EUROPEEN

(11) **EP 1 829 192 B1**
(45) Date de publication et mention de la délivrance du brevet: **24.05.2017**
(21) Numéro de dépôt: 05825934.2
(22) Date de dépôt: 12.12.2005
(51) Int. Cl.: H02K 15/06, H02K 3/12

(54) **METHODE D'INSERTION D'UN BOBINAGE DANS UN STATOR DE MACHINE ELECTRIQUE TOURNANTE POLYPHASEE, ET STATOR ASSOCIE**
VERFAHREN ZUM EINLEGEN EINER SPULE IN EINEN STATOR EINER ROTIERENDEN ELEKTRISCHEN POLYPHASENMASCHINE UND ASSOZIIERTER STATOR
METHOD FOR INSERTING A COIL IN A POLYPHASE ROTATING ELECTRICAL MACHINE STATOR, AND ASSOCIATED STATOR

(30) Priorité: 20.12.2004 FR 0413610
(43) Date de publication de la demande: 05.09.2007
(73) Titulaire: VALEO EQUIPEMENTS ELECTRIQUES MOTEUR, 94017 Créteil Cedex (FR)
(72) Inventeur: EVEN, Denis, F-75012 Paris (FR); CHOCHOY, Jean-Pierre, F-62240 Cremarest (FR)
(74) Mandataire: Tran, Chi-Hai
(86) Numéro de dépôt international: PCT/FR2005/003105
(87) Numéro de publication internationale: WO 2006/067297

(56) Documents cités:
- EP-A- 1 294 082
- US-A- 4 449 288
- US-A- 4 864 715
- US-A1- 2002 079 772

## Description

### Domaine de l'invention

L'invention concerne en général les machines électriques tournantes du type polyphasé, telles que les alternateurs ou les alterno-démarreurs de véhicules automobiles.

Plus précisément, l'invention concerne selon un premier aspect une méthode d'insertion d'un bobinage ondulé dans un stator de machine électrique tournante, telle qu'un alternateur ou un alterno-démarreur de véhicule automobile, le stator comprenant un paquet de tôles troué centralement et présentant un axe de symétrie et des encoches axialement traversantes ménagées dans une face radialement interne du paquet de tôles, le bobinage comprenant une pluralité d'enroulements de phase constitués chacun d'au moins un fil continu électriquement conducteur , chaque fil étant destiné à former autour de la face interne du paquet de tôles une spirale comprenant plusieurs spires correspondant chacune à un tour de la face interne, la méthode comprenant les étapes suivantes :
mise en forme de chaque enroulement, chaque fil de celui-ci étant conformé en une succession de créneaux reliés par des segments de liaison, chaque créneau comprenant deux branches latérales en regard l'une de l'autre destinées à s'insérer chacune dans une encoche, et une branche de tête reliant les deux branches latérales (étape référencée plus loin « étape 1/ »);
insertion des spires de chaque fil dans une série d'encoches du stator, les spires des différents fils se superposant radialement dans un ordre prédéterminé (étape référencée plus loin « étape 3/ »).

### Etat de la technique

On connaît un document US 4,449,288 qui décrit un procédé pour la réalisation d'un bobinage d'un stator d'alternateur de petite puissance dans lequel:
- on forme, hors du stator et pour chaque phase, une bobine initialement plate et ronde ayant le nombre de spires désiré,
- on préforme cette bobine, toujours hors du stator,de manière à lui donner une forme d'étoile ondulée,encore sensiblement plate, dont les ondulations correspondent au nombre de pôles et au pas d'encoches du stator,
- on amène cette bobine préformée en étoile ondulée contre une face extrême du paquet de tôles du stator,et
- on insère les fils dans les encoches de ce paquet de tôles par un basculement qui déforme la bobine hors de son plan, en direction de l'autre face extrême du paquet de tôles.

Des méthodes de ce type sont connues de l'art antérieur, en particulier par le document de brevet FR 2 608 334. Chaque phase, après mise en forme, est placée sur un outil d'insertion, puis insérée dans les encoches du paquet de tôles. L'insertion est effectuée phase par phase.

Les stators formés par cette méthode présentent des deux côtés du paquet de tôles des chignons très denses, offrant une forte résistance à la circulation d'air. En outre, les chignons sont non symétriques, l'un des chignons étant de hauteur axiale supérieure à celle de l'autre chignon, ce qui est également défavorable pour la circulation de l'air de refroidissement de ces chignons.

Par ailleurs, le taux de remplissage des encoches, c'est-à-dire le rapport entre la section du fil conducteur nu, usuellement en cuivre, et la section complète de l'encoche dans laquelle est monté un isolant d'encoche intervenant entre les bords des encoches et les fils, est limité à 50%, car le positionnement des branches latérales dans les encoches est mal maîtrisé pendant le transfert des spires de l'outil d'insertion vers les encoches.

De plus, les efforts nécessaires à l'insertion des fils conducteurs dans les encoches sont très importants. La phase insérée la dernière doit en effet pousser les phases insérées précédemment. Les efforts sont mal transmis d'une phase à une autre. Dans certaines conditions, ceci peut nuire à la qualité du produit.

Dans ce contexte, la présente invention a pour but de pallier les défauts mentionnés ci-dessus.

### Objet de l'invention

A cette fin, la méthode de l'invention, par ailleurs conforme à la définition générique qu'en donne le préambule ci-dessus, est essentiellement caractérisée en ce que les fils de tous les enroulements sont insérés dans les encoches en même temps, les spires des différents fils alternant dans l'ordre prédéterminé de superposition, et en ce que l'ordre de superposition comprend une succession de séquences identiques, chaque séquence étant constituée d'une spire de chaque fil.

De préférence, les encoches offrent une pluralité de positions de réception étagées radialement, les branches latérales des spires se superposant de l'intérieur vers l'extérieur dans ledit ordre prédéterminé occupent progressivement des positions de réception radialement plus extérieures dans les encoches.

Selon une caractéristique avantageuse de l'invention, les branches latérales d'un même créneau sont sensiblement droites et mutuellement parallèles.

Avantageusement, les branches de tête des créneaux sont cintrées et forment un chignon d'un premier côté axial du stator.

De même, les segments de liaison relient deux branches latérales respectives de deux créneaux voisins le long du fil et présentent une forme cintrée, ces segments formant un chignon d'un second côté axial du stator opposé au premier.

Selon une caractéristique avantageuse de l'invention, les branches de tête et/ou les segments de liaison formés à l'étape 1/ présentent des hauteurs croissantes ou décroissantes le long des fils.

Dans ce cas, les spires dont les branches latérales sont insérées en positions radialement extérieures de fonds d'encoches présentent des branches de tête et/ou des segments de liaison de hauteurs relativement plus grandes que les spires dont les branches latérales sont insérées en positions radialement intérieures.

Selon encore une caractéristique avantageuse de l'invention, la méthode peut comprendre après l'étape 3/ une étape 4/ de mise en forme des chignons par inclinaison des segments de liaison et/ou des branches de tête vers l'intérieur.

Alternativement, elle peut comprendre après l'étape 3/ une étape 4/ de mise en forme des chignons par inclinaison des segments de liaison et/ou des branches de tête vers l'extérieur.

Par ailleurs, on notera que la méthode peut comprendre, après l'étape 1/, une étape 1'/ de mise en forme locale du fil dans des zones de ce fil destinées à croiser d'autres fils, ou d'autres zones du même fil, une fois les enroulements insérés dans le stator.

Dans ce cas, la mise en forme locale du fil consiste à déformer localement la section du fil, ou à courber localement le fil.

Avantageusement, la mise en forme locale est réalisée par pincement, matriçage, ou moletage.

Selon encore une autre une caractéristique avantageuse de l'invention, le fil peut présenter une section ronde, les encoches présentant une largeur circonférencielle multiple du diamètre du fil.

Dans un mode de réalisation possible de l'invention, les encoches présentent une largeur circonférencielle correspondant au diamètre du fil, la branche latérale occupant la position la plus radialement intérieure étant déformée par élargissement suivant une direction circonférencielle de manière à maintenir les branches latérales occupant les autres positions à l'intérieur de l'encoche.

Dans un autre mode de réalisation possible de l'invention, les encoches présentent une largeur circonférencielle égale à au moins deux diamètres du fil et présentent d'un côté radialement interne une ouverture partiellement obturée de deux côté opposés par deux redans axiaux, les branches latérales occupant les encoches étant maintenues à l'intérieur de celle-ci par une cale plate en appui sur les redans d'un côté intérieur de l'encoche.

Dans ce cas, la cale est constituée d'une matière plastique chargée en une matière magnétique, notamment en fer.

De préférence, l'ouverture présente une largeur circonférentielle égale au diamètre du fil augmenté d'un jeu inférieur à 0,6 millimètres.

De plus, les encoches peuvent présenter une profondeur radiale multiple du diamètre du fil.

Selon encore une autre caractéristique avantageuse de l'invention, la méthode peut comprendre, entre les étapes 1/ et 3/, l'étape 2/ suivante :
2/ mise en place des fils de tous les enroulements sur un outil d'insertion cylindrique, les spires des fils s'enroulant autour de l'outil d'insertion en se superposant radialement de l'intérieur vers l'extérieur dans ledit ordre prédéterminé.

Dans ce cas, sur l'outil d'insertion, les créneaux s'étendent dans des plans respectifs parallèles à l'axe de symétrie de l'outil d'insertion, ou faiblement inclinés par rapport à cet axe.

Dans un mode de réalisation possible de l'invention, l'étape 3/ d'insertion des enroulements dans les encoches est réalisée par déplacement de l'outil d'insertion le long de l'axe de symétrie du stator.

Dans un autre mode de réalisation possible de l'invention, l'étape 3/ d'insertion des enroulements dans les encoches est réalisée en disposant l'outil d'insertion au centre du paquet de tôles et en forçant les spires radialement dans les encoches de l'intérieur vers l'extérieur.

Dans ce cas, l'outil d'insertion comprend une pluralité de fentes radiales ménagées sur une face radialement extérieure de l'outil et s'étendant dans des plans radiaux respectifs régulièrement répartis autour d'un axe de symétrie de l'outil, une pluralité de lames disposées dans les fentes radiales, et des moyens de déplacement des lames radialement de l'intérieur vers l'extérieur dans les fentes radiales, les branches latérales des spires venant s'insérer dans les fentes radiales à l'étape 2/ d'un côté radialement extérieur des lames, les lames étant déplacés radialement vers l'extérieur à l'étape 3/ de façon à transférer les branches latérales des fentes radiales dans les encoches.

Avantageusement, les fentes radiales sont en nombre égal au nombre d'encoches.

De préférence, chaque fente radiale présente une largeur circonférentielle correspondant à la section du fil, de sorte que les branches latérales sont toutes alignées radialement dans la fente.

Par exemple, à l'étape 1/, après mise en forme des fils des enroulements en une succession de créneaux alignés longitudinalement, les fils de tous les enroulements sont empilés à plat sur un râtelier longitudinal rectiligne dans lequel sont ménagées des fentes transversales mutuellement parallèles, les branches latérales des créneaux de chaque fil venant s'insérer dans une série de fentes transversales.

Dans ce cas, à l'étape 2/, l'empilement formé par les fils des enroulements est enroulé à partir du râtelier autour de l'outil d'insertion.

Dans le cas où le bobinage comprend six fils répartis en trois paires, la position des spires d'un fil d'une paire donnée peut avantageusement se déduire de la position des spires de l'autre enroulement de la même paire par une rotation correspondant à un décalage d'une encoche.

De même, la position des spires des fils d'une paire peut avantageusement se déduire de la position des spires des fils d'une autre paire par une rotation correspondant à un décalage de deux ou quatre encoches.

Selon un second aspect, l'invention concerne un stator de machine électrique tournante polyphasée, telle qu'un alternateur ou un alterno-démarreur de véhicule automobile, ce stator comprenant un paquet de tôles troué centralement présentant un axe de symétrie, des encoches axialement traversantes ménagées dans une face radialement interne du paquet de tôles, et un bobinage comprenant une pluralité d'enroulements de phase constitués chacun d'au moins un fil continu électriquement conducteur, chaque fil formant autour de la face interne de paquet de tôles une spirale comprenant plusieurs spires correspondant chacune à un tour de la face interne ;
chaque fil étant conformé en une succession de créneaux reliés par des segments de liaison, chaque créneau comprenant deux branches latérales en regard l'une de l'autre venant s'insérer chacune dans une encoche, et une branche de tête reliant les deux branches latérales; les spires des fils se superposant radialement dans un ordre prédéterminé ;
caractérisé en ce que les spires des différents fils alternent dans l'ordre prédéterminé de superposition et en ce que l'ordre de superposition prédéterminé comprend une succession de séquences identiques, chaque séquence étant constituée d'une spire de chaque fil.

De préférence, les encoches offrent une pluralité de positions de réception étagées radialement, les branches latérales des spires se superposant de l'intérieur vers l'extérieur dans ledit ordre prédéterminé occupant progressivement des positions de réception radialement plus extérieures dans les encoches.

Selon une caractéristique avantageuse de l'invention, les branches latérales de chaque créneau sont sensiblement droites et mutuellement parallèles.

Avantageusement, les branches de tête des créneaux sont cintrées et forment un chignon d'un premier côté axial du stator.

De même, les segments de liaison relient deux branches latérales respectives de deux créneaux voisins le long du fil et présentent une forme cintrée, ces segments formant un chignon d'un second côté axial du stator opposé au premier.

Par exemple, les segments de liaison et/ou les branches de tête constituant les chignons peuvent être inclinés vers l'intérieur.

Alternativement, les segments de liaison et/ou les branches de tête constituant les chignons peuvent être inclinés vers l'extérieur.

Selon une autre caractéristique avantageuse de l'invention, le fil est mis en forme localement dans des zones de ce fil croisant d'autres fils ou d'autres zones du même fil.

Dans ce cas, la mise en forme locale du fil consiste à déformer localement la section du fil, ou à courber localement le fil.

De préférence, la mise en forme locale est réalisée par pincement, matriçage, ou moletage.

Selon encore une autre caractéristique avantageuse de l'invention, le fil présente une section ronde, les encoches présentant une largeur circonférencielle multiple du diamètre du fil.

Dans un mode de réalisation possible de l'invention, les encoches présentent une largeur circonférencielle correspondant au diamètre du fil, la branche latérale occupant la position la plus radialement intérieure étant déformée par élargissement suivant une direction circonférencielle de manière à maintenir les branches latérales occupant les autres positions à l'intérieur de l'encoche.

Dans un autre mode de réalisation possible de l'invention, les encoches présentent une largeur circonférencielle égale à au moins deux diamètres du fil et présentent d'un côté radialement interne une ouverture partiellement obturée de deux côté opposés par deux redans axiaux, les branches latérales occupant les encoches étant maintenues à l'intérieur de celle-ci par une cale plate en appui sur les redans d'un côté intérieur de l'encoche.

Dans ce cas, la cale est constituée d'une matière plastique chargée en une matière magnétique, notamment en fer.

En outre, l'ouverture peut présenter une largeur circonférentielle égale au diamètre du fil augmenté d'un jeu inférieur à 0,6 millimètres.

De préférence, les encoches présentent une profondeur radiale multiple du diamètre du fil.

Dans le cas où le bobinage comprend six fils répartis en trois paires, la position des spires d'un fil d'une paire donnée peut avantageusement se déduire de la position des spires de l'autre fil de la même paire par une rotation correspondant à un décalage d'une encoche.

De même, la position des spires des fils d'une paire peut se déduire de la position des spires des fils d'une autre paire par une rotation correspondant à un décalage de deux ou quatre encoches.

### Brève description des figures

D'autres caractéristiques et avantages de l'invention ressortiront clairement de la description qui en est faite ci-dessous, à titre indicatif et nullement limitatif, en référence aux figures annexées, parmi lesquelles :
- les figures 1A et 1B sont des vues axiales d'une partie d'un stator, respectivement obtenu conformément à la méthode de l'art antérieur et conforme à la méthode de l'invention,
- les figures 2A et 2B sont des vues en perspective des stators des figures 1A et 1B,
- la figure 3 est une représentation schématique développée d'un fil d'un enroulement de phase du stator des figures 1B et 2B, après mise en forme à l'étape 1/,
- la figure 4 est une représentation schématique développée de trois fils du stator des figures 1B et 2B, montrant les zones de croisement de ces trois enroulements dans le stator après insertion, les cercles indiquant les zones de mise en forme locale,
- la figure 5 est une vue de côté de l'outil d'insertion après mise en place des fils sur cet outil à l'étape 2/, pour un premier mode de réalisation de l'invention,
- la figure 6 est une vue en perspective selon la flèche VI de la figure 5,
- les figures 7A et 7B sont des représentations schématiques illustrant l'étape 3/ d'insertion des spires dans les encoches du stator, pour le premier mode de réalisation de l'invention dans lequel l'insertion est réalisée par déplacement axial de l'outil d'insertion,
- la figure 8 est une vue de côté du paquet de tôles et de l'outil d'insertion à l'étape 3/ pour le premier mode de réalisation,
- la figure 9 est une vue en perspective selon la flèche IX de la figure 8,
- la figure 10 est une vue schématique de côté d'un stator obtenu conformément à l'invention,
- les figures 11A, 11B et 11C sont des représentations schématiques des sections respectivement d'une encoche d'un stator de l'invention de largeur correspondant à un diamètre de fil, à deux diamètres de fil et d'une encoche d'un stator de l'art antérieur,
- la figure 12 est un schéma de principe montrant la superposition des spires des différents fils autour de l'outil d'insertion,
- la figure 13 est un schéma de principe montrant la superposition des spires dans le paquet de tôles,
- la figure 14 est une vue de dessus montrant les enroulements de phases sur le râtelier à la fin de l'étape 1/ pour un second mode de réalisation de l'invention,
- la figure 15 est une vue de côté du râtelier, selon la flèche XV de la figure 14,
- la figure 16 est une vue selon l'axe de symétrie de l'outil d'insertion, au cours d'étape 2/, pour le second mode de réalisation de l'invention,
- la figure 17 montre l'outil d'insertion de la figure 16 à la fin de l'étape 2/,
- la figure 18A est une vue suivant une direction radiale de l'outil d'insertion de la figure 17 disposé au centre du paquet de tôles, au début de l'étape 3/,
- la figure 18B est une vue suivant la flèche XVIII de la figure 18A,
- la figure 19 est une vue similaire à celle de la figure 18B, montrant l'état en fin d'étape 3/,
- la figure 20 est une demi-vue en coupe axiale de l'outil d'insertion des figures 17 à 19 montrant une lame de l'outil rétracté d'un côté radialement intérieur sur la moitié gauche de la figure, et une lame partiellement déplacée vers l'extérieur sur la moitié droite,
- la figure 21 est une demi-vue en coupe de l'outil de la figure 20, dans un plan perpendiculaire à l'axe de symétrie de cet outil, considérée suivant l'incidence des flèches XXI de la figure 20, et
- la figure 22 est une vue de côté, suivant une direction radiale, d'un stator obtenue à l'aide de la méthode de l'invention.

### Exemples de réalisation de l'invention

La méthode d'insertion est adaptée à un bobinage ondulé 50 à insérer dans un stator 1 d'alternateur ou d'alterno-démarreur de véhicule automobile.

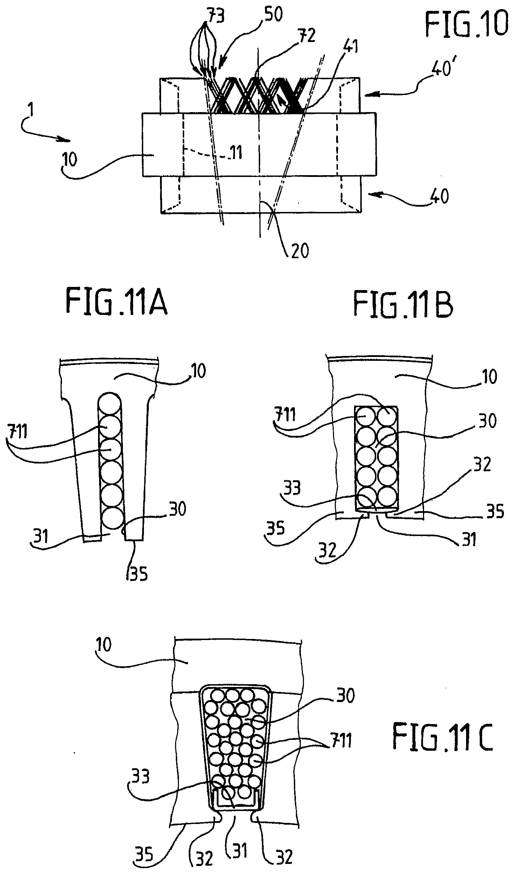

Le stator 1 comprend un paquet de tôles 10 cylindrique présentant un axe de symétrie axiale 20 (figure 10), et des encoches axiales 30 ménagées dans une face radialement interne 11 du paquet de tôles 10. Les encoches 30 sont séparées les unes des autres par des nervures axiales 35 appelées dents (figures 11A, 11B).

Ces encoches 30 traversent axialement de part en part le paquet de tôles 10 troué centralement car elles s'étendent sur toute la longueur axiale du paquet de tôles 10 et sont ouvertes radialement d'un côté intérieur et aux deux extrémités axiales opposées.

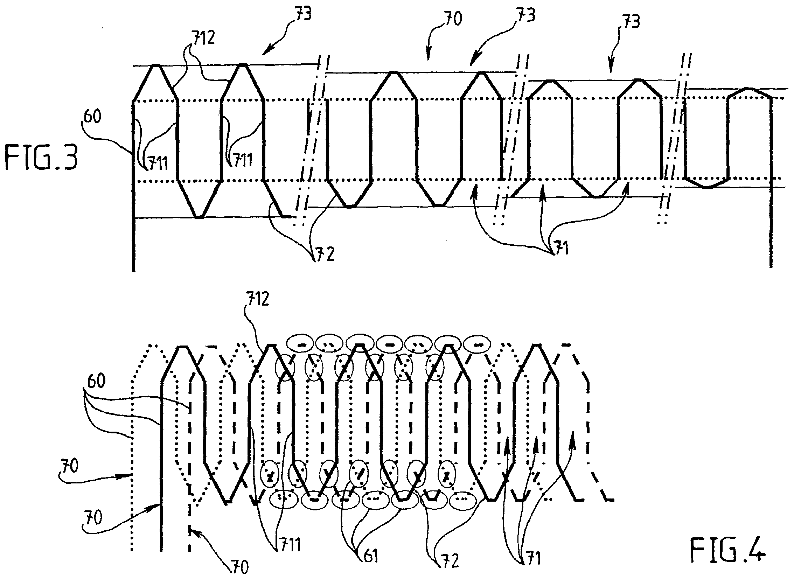

Le bobinage 50 comprend une pluralité d'enroulements de phase 70 constitués chacun d'au moins un fil 60 continu électriquement conducteur (figures 3 et 4). Le fil est par exemple en cuivre recouvert d'un isolant tel que de l'émail.

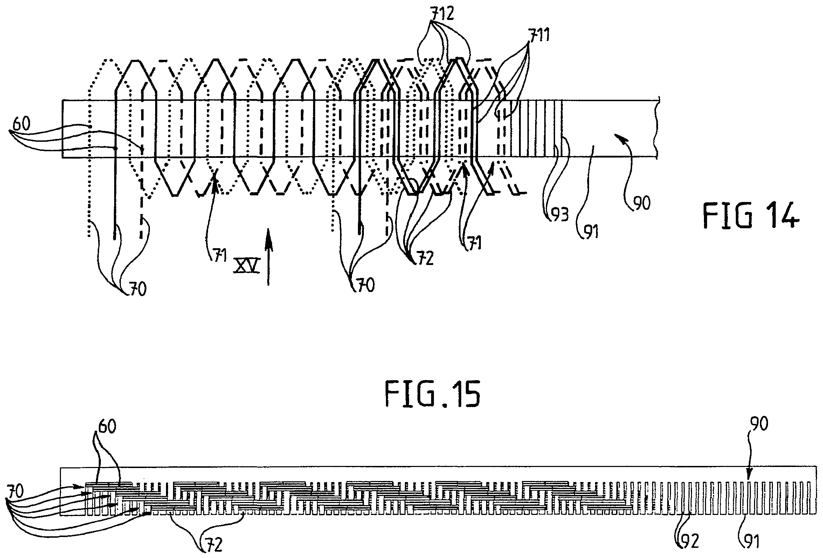

Les enroulements de phase 70 comprennent généralement un fil unique, ou deux fils parallèles (voir figure 15 par exemple) dont les extrémités d'entrées respectives sont mutuellement connectées électriquement et dont les extrémités de sorties respectives sont aussi mutuellement connectées électriquement.

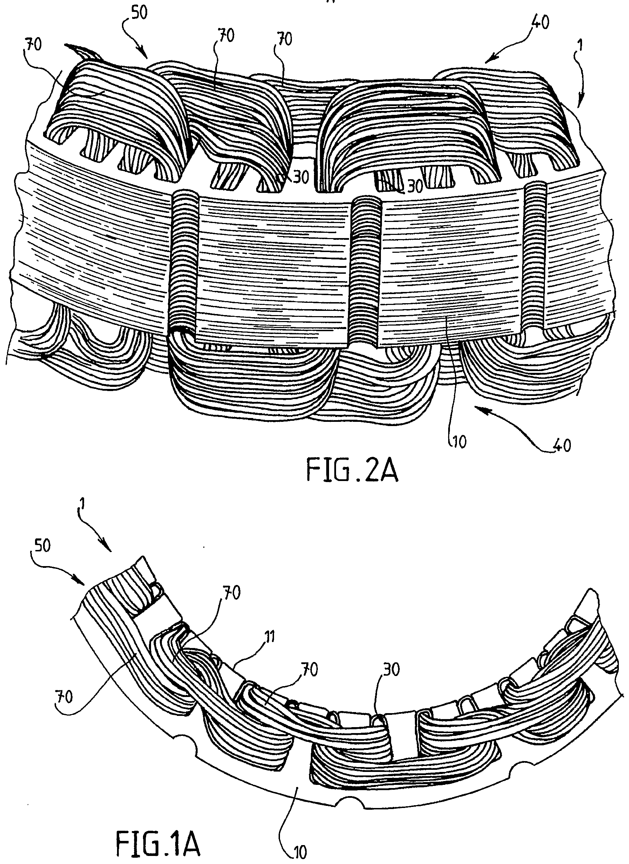

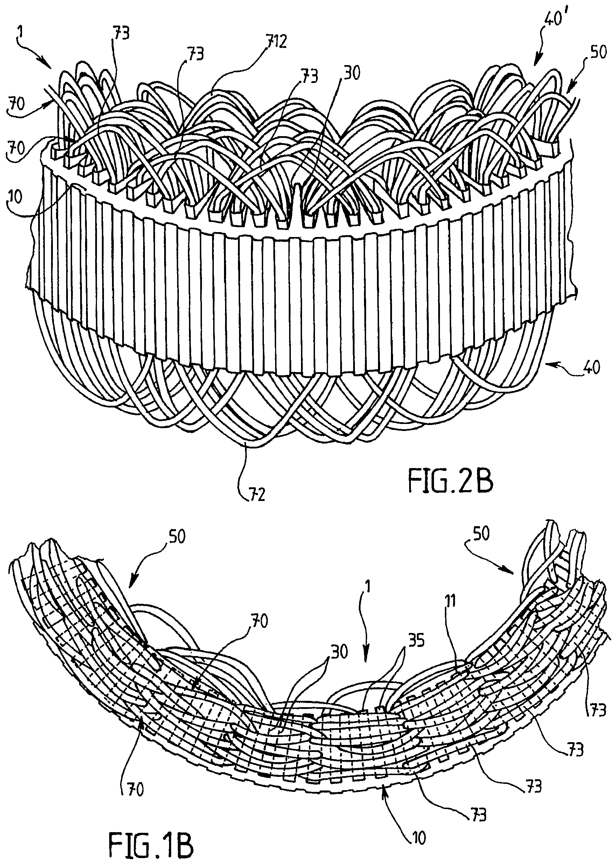

De manière connue, un isolant d'encoche, visible à la figure 2B, est interposé entre les fils et le bord des encoches.

La méthode comprend les étapes suivantes.
1/ Mise en forme de chaque enroulement 70, chaque fil 60 de celui-ci étant conformé en une succession de créneaux 71 reliés par des segments de liaison 72, comme illustré sur la figure 3. Chaque créneau 71 comprend deux branches latérales 711 en regard l'une de l'autre destinées à s'insérer chacune dans une encoche 30, et une branche de tête 712 reliant les deux branches latérales 711.
3/ Insertion de chaque enroulement 70 dans le stator, de façon à ce que les branches latérales 711 soient disposées dans une série d'encoches 30 du stator 1, les branches de têtes 712 et les segments de liaison 72 formant des chignons 40 et 40' respectivement d'un premier et d'un second côté axial du stator 1.

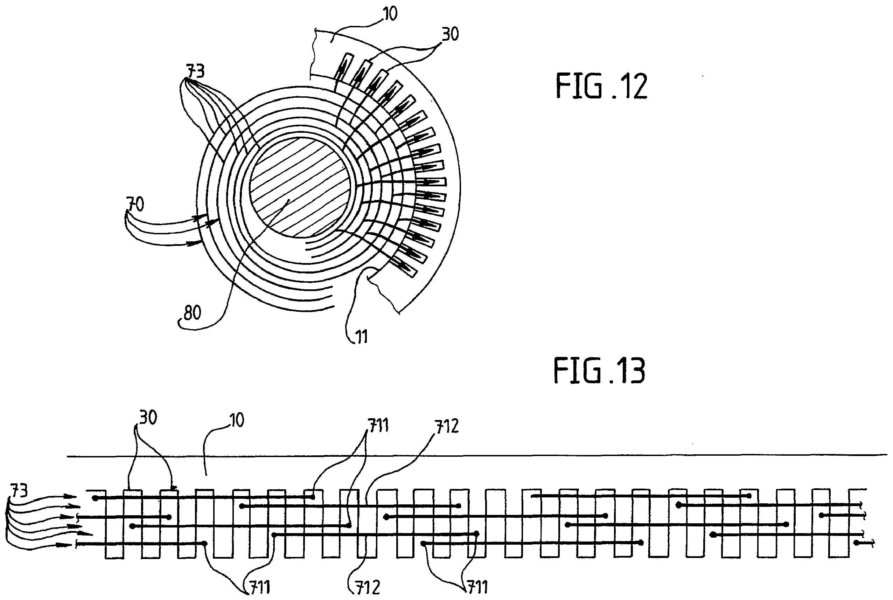

Les encoches 30 sont divisées en plusieurs séries généralement associées chacune exclusivement à un fil 60 donné. Les encoches d'une même série sont réparties régulièrement autour du stator 1, les positions des séries d'encoches 30 associées aux différents fils se déduisant les unes des autres par un décalage angulaire d'une encoche, comme le montrent les figures 12 et 13.

Un fil 60 peut également être réparti dans plusieurs séries d'encoches différentes.

Chaque fil 60 est enroulé en spirale autour de la face interne du paquet de tôles 10 et forme ainsi plusieurs spires 73 correspondant chacune à un tour de la face interne. Ces spires 73 sont coaxiales à l'axe de symétrie 20 du stator.

Les spires 73 des différents fils 60 se superposent radialement dans un ordre prédéterminé, et sont disposées dans les encoches 30 de façon concentrique, les spires 73 insérées les premières étant disposées radialement à l'extérieur dans le fond des encoches, et les spires 73 insérées les dernières étant disposées radialement à l'intérieur du paquet de tôles 10 au niveau de l'ouverture des encoches.

Les encoches 30 offrent chacune une pluralité de positions de réception des branches latérales 711 étagées radialement.

Les branches latérales 711 d'une spire 73 d'un fil 60 donné sont insérées dans la série d'encoches 30 correspondant audit fil.

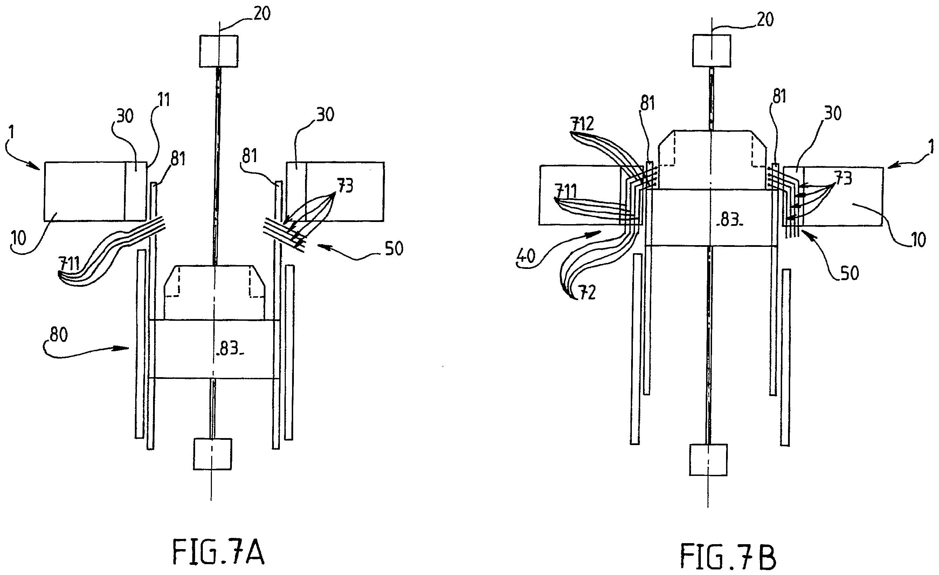

Les branches latérales 711 de ces spires 73 occupent progressivement des positions radialement plus intérieures dans les encoches au fur et à mesure de l'insertion des spires 73, comme illustré sur les figures 7A et 7B.

Selon l'invention, les fils 60 de tous les enroulements 70 sont insérés dans les encoches 30 en même temps, les spires 73 des différents fils 60 alternant dans l'ordre prédéterminé de superposition radiale autour du stator et l'ordre de superposition comprenant une succession de séquences identiques, chaque séquence étant constituée d'une spire 73 de chaque fil 60.

Après insertion des spires 73 dans les encoches 30 à l'étape 3/, on trouve alors dans le stator, à partir de l'extérieur vers l'intérieur, une première séquence de spires 73 comprenant une spire 73 de chaque fil 60, puis une seconde séquence de spires identique à la première, puis une troisième, etc..., comme illustré sur la figure 13.

Cet ordre de superposition est typiquement obtenu en enroulant en spirale un empilement constitué des différents fils 60 superposés, comme le montre la figure 12.

Les encoches 30 occupées par les branches latérales 711 des spires d'un fil 60 donné sont décalées angulairement par rapport aux encoches 30 occupées par les branches latérales 711 des spires des autres fils 60.

De ce fait, dans les chignons 40, 40', les branches de têtes 712 et les segments de liaison 72 des spires d'une même séquence ne sont pas alignés radialement mais au contraire décalés angulairement les uns par rapport aux autres, comme on le voit sur la figure 2B et sur la figure 13.

Il en résulte que les branches de têtes 712 et les segments de liaison 72 des spires ne constituent pas dans les chignons 40, 40' des blocs compacts s'opposant à la circulation d'air de refroidissement de la machine électrique tournante.

On va maintenant décrire deux modes de réalisation de la méthode de l'invention, différant par la façon dont est réalisée l'insertion des spires 73 dans les encoches 30.

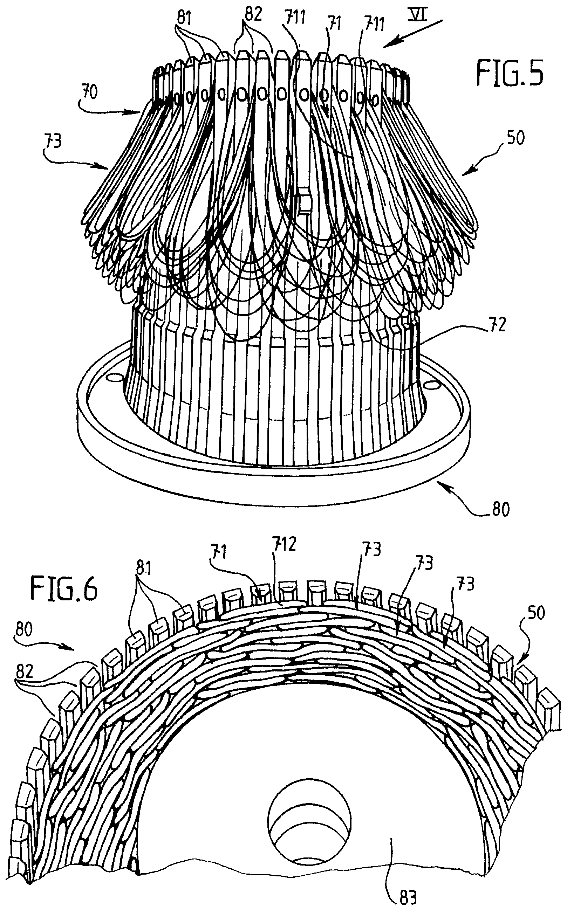

Le premier mode de réalisation est illustré sur les figures 5 à 9.

La méthode comprend, entre les étapes 1/ et 3/, l'étape 2/ suivante :
2/ mise en place des fils 60 sur un outil d'insertion 80 cylindrique, les spires 73 des fils 60 s'enroulant autour de l'outil d'insertion 80 en se superposant radialement de l'intérieur vers l'extérieur dans l'ordre de superposition prédéterminé, comme on le voit sur la figure 12.

A l'étape 3/, l'insertion des fils 60 dans les encoches 30 est réalisée par déplacement de l'outil d'insertion 80 le long de l'axe de symétrie 20 du stator 1. Les spires 73 sont transférées en ordre inverse de l'ordre d'enroulement sur l'outil, les spires 73 situées radialement à l'extérieur étant insérées les premières et occupant les fonds des encoches 30, et les spires 73 situées radialement à l'intérieur étant insérées les dernières et étant disposées près des ouvertures 31 des encoches 30.

On voit sur la figure 5 que l'outil d'insertion 80 comprend une pluralité de doigts 81 parallèles à l'axe de symétrie de l'outil, disposés en cercle, présentant des extrémités libres tournées d'un côté axial supérieur de l'outil, ces doigts étant séparés par des interstices 82.

Lors de la mise en place des enroulements à l'étape 2/, les enroulements 70 sont disposés sur l'outil d'insertion de façon à ce que les branches latérales 711 de chaque créneau 71 soient disposées chacune dans un interstice 82 et s'étendent essentiellement à l'extérieur du cercle, la branche de tête 712 reliant les branches latérales par un côté intérieur au cercle, les segments de liaison 72 reliant les créneaux par un côté extérieur au cercle.

Les spires 73 sont enfilées par le côté supérieur de l'outil 80 sur les extrémités libres des doigts 81, et sont superposées parallèlement à l'axe de symétrie de l'outil d'insertion 80, les spires mises en place les premières étant disposées du côté inférieur et les spires mises en place les dernières étant disposées d'un côté supérieur de l'outil 80.

Les interstices 82 sont en nombre égal aux encoches 30.

Les enroulements 70 sont enroulés autour de l'outil d'insertion 80 en même temps à l'étape 2/, ce dont il résulte que les spires 73 qui se succèdent dans l'ordre déterminé d'enroulement appartiennent alternativement aux différents enroulements 70.

Selon une autre caractéristique de l'invention, visible sur la figure 5, les créneaux 71 s'étendent dans des plans respectifs parallèles à l'axe de symétrie de l'outil d'insertion 80, ou faiblement inclinés par rapport à cet axe, une fois les spires 73 enroulées sur l'outil d'insertion 80.

Cette caractéristique est particulièrement importante du fait que l'étape 3/ d'insertion des enroulements 70 dans les encoches 30 est réalisée par déplacement de l'outil d'insertion 80 le long de l'axe de symétrie 20 du stator 1.

Les doigts 81 définissent le diamètre extérieur de l'outil 80, ce diamètre étant légèrement plus faible que le diamètre intérieur du paquet de tôles 10.

Comme le montrent les figures 7A et 7B, l'outil 80 comprend, outre les doigts 81, un champignon 83 mobile axialement au centre du cylindre constitué par les doigts 81. Le champignon 83 présente un diamètre extérieur pratiquement égal au diamètre intérieur du cylindre constitué par les doigts 81.

L'outil d'insertion 80 est disposé sous le second côté axial du stator 1, son extrémité supérieure étant tournée vers le haut.

L'outil 80 se déplace vers le haut pour insérer les spires 73, les doigts 81 et le champignon 83 se déplaçant parallèlement au cours d'une première phase d'insertion des branches latérales 711 dans les encoches 30, puis au cours d'une seconde phase les doigts 81 restant immobiles alors que le champignon 83 continue à se déplacer.

Au cours de la première phase, le champignon 83 se déplace à la même vitesse que les doigts 81. Les branches latérales 711 pénètrent par le bas dans les encoches 30 et coulissent vers le haut le long des encoches 30. C'est d'abord une portion de la chaque branche latérale 711 s'étendant immédiatement à l'extérieur des doigts 81 qui s'engage dans l'encoche 30 correspondante, puis, progressivement avec le déplacement de l'outil d'insertion 80 vers le haut, toute la branche latérale 711 depuis le doigt jusqu'au segment de liaison 72.

La première phase se termine quand l'extrémité libre des doigts 81 arrive au niveau de la face axiale du paquet de tôles 10 tournée du premier côté.

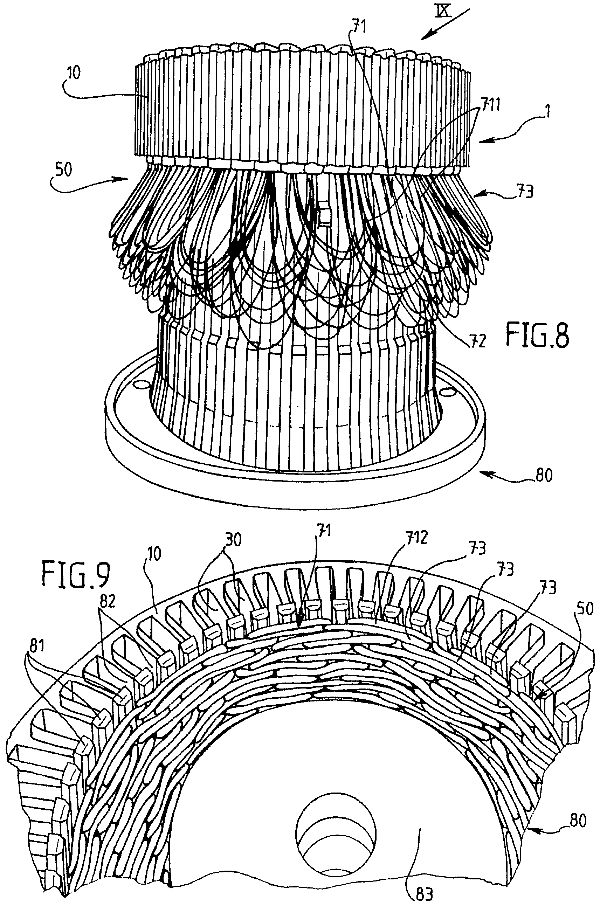

Les doigts 81 s'immobilisent, et le champignon 83 continue à se déplacer, de telle sorte qu'il pousse axialement vers le haut les branches de tête 712, comme le montre la figure 9.

Le champignon 83 pousse directement sur les branches de tête 712 des spires 73 situées le plus bas, ces branches de tête 712 transmettant cet effort aux spires situées plus haut. On comprend donc que le champignon 83 pousse l'ensemble des spires 73, et que celles-ci sont toutes insérées dans les encoches en une seule opération.

Ce mouvement a un double effet. Il permet de faire basculer les branches de têtes 712 au-dessus des extrémités libres des doigts 81, ces branches venant se placer dans le prolongement axial du paquet de tôles 10. Les branches des spires 73 situées en haut basculent les premières, et les branches des spires 73 situées en bas basculent les dernières.

Il permet également de tirer axialement les segments de liaison 72 pour les bloquer en position du second côté du paquet de tôles 10 et former le chignon 40'.

Du fait que les créneaux 71 des enroulements 70 sont disposés sur l'outil d'insertion 80 dans des plans pratiquement parallèles à l'axe de symétrie de cet outil, les branches latérales 711 ne subissent pratiquement pas de torsion quand elles sont insérées dans les encoches 30 et quand les branches de têtes sont basculées au-dessus des extrémités libres des doigts 81.

Par ailleurs, l'ordonnancement des spires 73 autour de l'outil d'insertion 80 permet une transmission très efficace de l'effort de poussée du champignon 83 aux spires 73 les plus éloignées de celui-ci, c'est-à-dire aux spires 73 disposées le plus haut sur l'outil d'insertion 80.

En effet, l'ordre d'enroulement des spires 73 permet d'obtenir que chaque branche de tête 712 d'une spire vient en appui sur au moins deux branches de tête 712 de la spire immédiatement supérieure, chacune de ces deux branches de tête 712 venant en appui sur deux autres branches de tête 712 de la spire encore supérieure, et ainsi de suite. L'effort de poussée est ainsi très bien réparti circonférenciellement autour de l'outil d'insertion.

Comme tous les enroulements 70 sont insérés en une seule opération, le champignon doit pouvoir exercer un effort de poussée important sur les branches de tête 712. A cet effet, l'outil d'insertion 83 est muni de deux actionneurs, un actionneur inférieur qui pousse le champignon vers le haut, et un actionneur supérieur qui le tire vers le haut. Le champignon 83 dispose ainsi de la puissance nécessaire pour réaliser la mise en place des branches de tête 712 dans de bonnes conditions.

Le second mode de réalisation de la méthode de l'invention est illustré sur les figures 14 à 21.

Comme on le voit sur les figures 14 et 15, l'étape 1/ comprend une première sous-étape au cours de laquelle les fils 60 des enroulements 70 sont conformés chacun en une succession de créneaux 71 alignés longitudinalement, et une seconde sous-étape suivant la première dans laquelle les fils 60 sont empilés à plat sur un râtelier 90 longitudinal rectiligne présentant une première face plane 91 dans laquelle sont ménagées des fentes transversales 92.

Ces fentes transversales 91 sont régulièrement réparties suivant la direction longitudinale le long du râtelier et présentent un écartement mutuel longitudinal constant. Elles s'étendent dans des plans respectifs perpendiculaires à la direction longitudinale et mutuellement parallèles.

Comme le montre la figure 3, l'enroulement 70 à la fin de la première sous-étape s'étend suivant une direction générale longitudinale, les branches latérales 711 s'étendant toutes sensiblement transversalement et étant toutes disposées parallèlement les unes aux autres dans un alignement longitudinal.

Comme on le constatera sur la figure 3, toutes les branches latérales 711 présentent la même longueur transversalement. De plus, le pas polaire, c'est-à-dire l'écartement longitudinal séparant deux branches latérales 711 consécutives dans l'alignement, est constant le long de tout le fil 60. Exceptionnellement, deux branches latérales 711 peuvent être séparées par un pas différent, à des points singuliers du fil 60.

Les branches latérales 711 des créneaux 71 de chaque fil 60 viennent s'insérer dans une série de fentes latérales 92.

Les branches de tête 712 des créneaux 71 sont toutes disposées d'un même côté du râtelier 90 et sont cintrées, ces branches de tête étant concaves du côté des branches latérales 711.

Les segments de liaison 72 sont disposés d'un côté du râtelier 90 opposé aux branches de tête 712 et présentent également une forme cintrée de concavité tournée vers les branches latérales 711.

La figure 15 montre que les fils 60 sont superposés sur le râtelier 90.

On a vu plus haut que ledit ordre de superposition radial des spires 73 autour du stator 1 est constitué d'une succession de séquences identiques, cette séquence comprenant une spire 73 de chaque fil 60.

Les fils 60 sont superposés sur le râtelier 90 dans un ordre correspondant à celui de ladite séquence.

De même que dans le premier mode de réalisation, la méthode comprend, entre les étapes 1/ et 3/, l'étape 2/ de mise en place des fils 60 sur un outil d'insertion 80 cylindrique, les spires 73 des fils 60 s'enroulant autour de l'outil d'insertion 80 en se superposant radialement de l'intérieur vers l'extérieur dans ledit ordre prédéterminé de superposition.

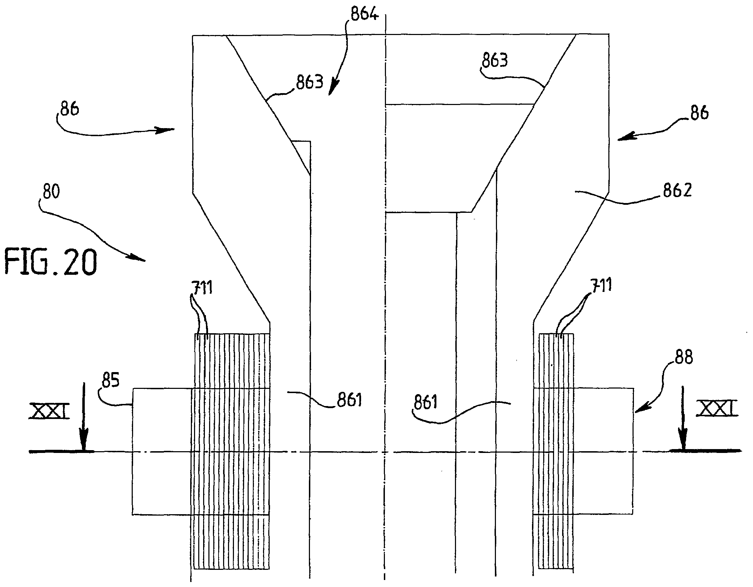

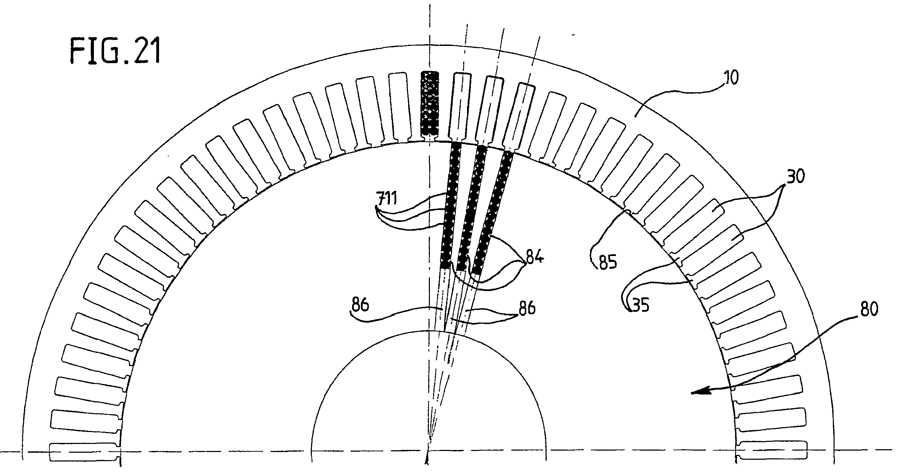

On voit sur les figures 20 et 21 que l'outil d'insertion 80 comprend dans ce second mode de réalisation une partie cylindrique 88 présentant une face radialement extérieure 85 dans laquelle sont ménagées une pluralité de fentes radiales 84 s'étendant dans des plans radiaux respectifs régulièrement répartis autour d'un axe de symétrie de l'outil 80, une pluralité de lames 86 disposées dans les fentes radiales, et des moyens 87 de déplacement des lames 86 radialement de l'intérieur vers l'extérieur dans les fentes radiales 84.

Les fentes radiales 84 sont en nombre égal au nombre d'encoches 30.

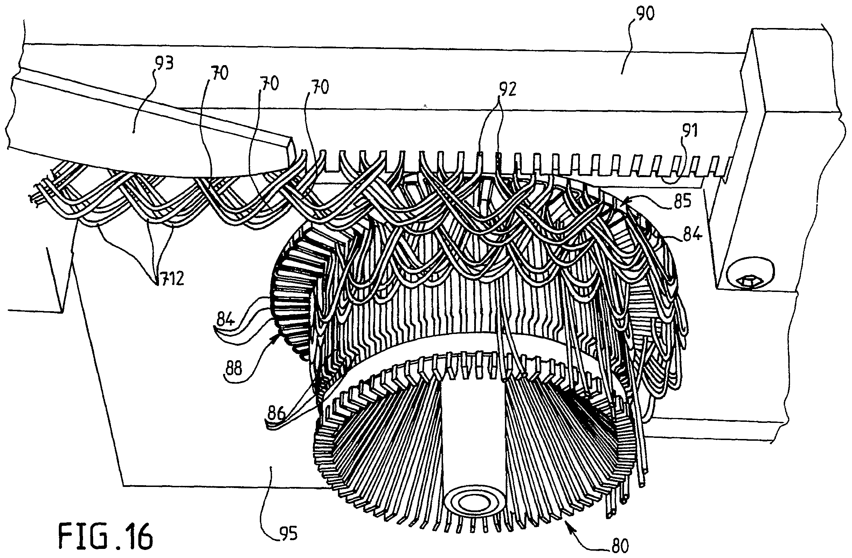

A l'étape 2/, l'empilement formé par les fils 60 est enroulé à partir du râtelier 90 autour de l'outil d'insertion 80, comme le montre la figure 16.

Dans ce but, on fait défiler le râtelier 90 le long de l'outil 80, la première face 91 portant les fentes transversales 92 passant sensiblement tangentiellement à la face extérieure 85 de l'outil 80, cet outil étant animé dans le même temps d'un mouvement de rotation autour de son axe.

Les fentes transversales 92 passent toutes successivement au point de tangence entre le râtelier et l'outil, les fentes radiales 84 défilant également à ce même point. Les déplacements du râtelier 90 et de l'outil 80 sont synchronisées de façon à ce que les fentes radiales 84 et les fentes transversales défilent à la même vitesse au point tangent.

Des cames fixes 93 disposées des deux côtés transversaux opposés du râtelier 90, à proximité de l'outil 80, sollicitent les enroulement 70 vers l'outil 80 dans un sens radial par rapport à celui-ci. Ces cames 93 sont disposées légèrement en amont de l'outil 80 suivant le sens de défilement du râtelier, et appuient sur segments de liaison 72 et sur les branches de têtes 712.

Sous l'effet de la sollicitation des cames 93, les branches latérales 711 disposées dans la fente transversale 92 arrivant au point de tangence glissent dans la fente radiale 84 se trouvant au même instant à ce point de tangence.

L'outil 80 effectue plusieurs tours pendant que le râtelier 90 défile.

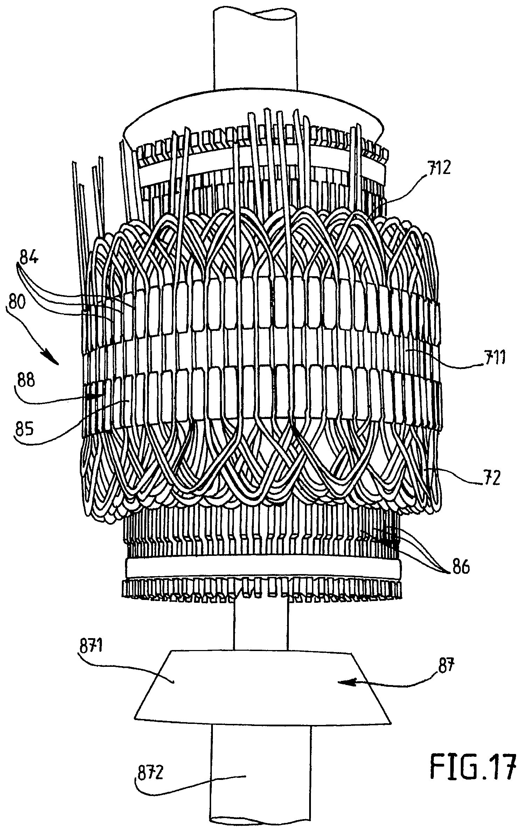

L'état de l'outil en fin d'étape 2/ est représenté sur la figure 17.

On notera, comme on le voit sur la figure 16, que l'outil 80 tourne à l'intérieur d'un logement 94 en forme de disque ménagé dans un support 95, ce logement 94 présentant un diamètre correspondant à celui de l'outil 80. Ce logement 94 est ouvert sur arc de cercle de 45° environ, le point de tangence entre l'outil et le râtelier étant situé sensiblement au centre de cet arc de cercle. La face intérieure du logement 94 maintient les spires 73 engagées à l'intérieur des fentes radiales 84.

Pendant l'étape 2/, les lames 86 sont disposées au fond des fentes radiales 84, les branches latérales 711 des spires 73 venant s'insérer dans ces fentes radiales 84 d'un côté radialement extérieur des lames 84, comme on le voit sur la figure 21.

On notera que chaque fente radiale 84 présente une largeur circonférentielle correspondant à la section du fil des enroulements, de sorte que les branches latérales 711 sont toutes alignées radialement dans la fente 84.

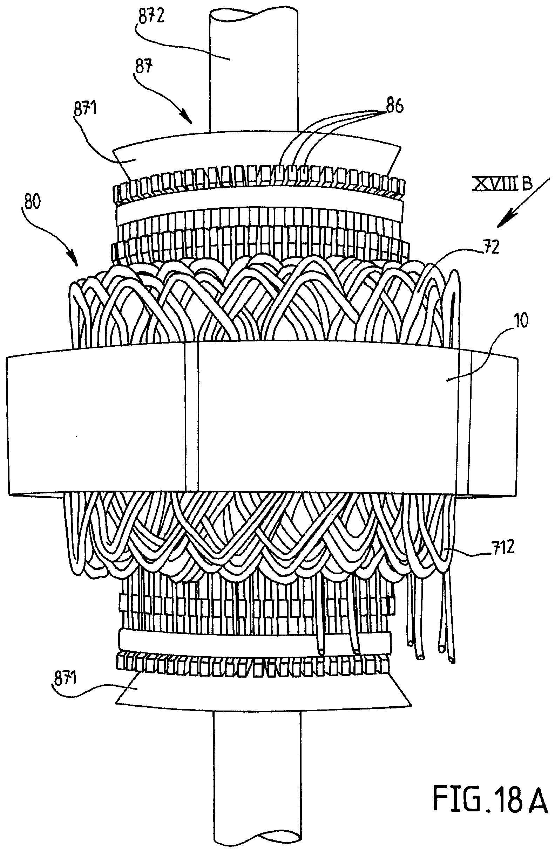

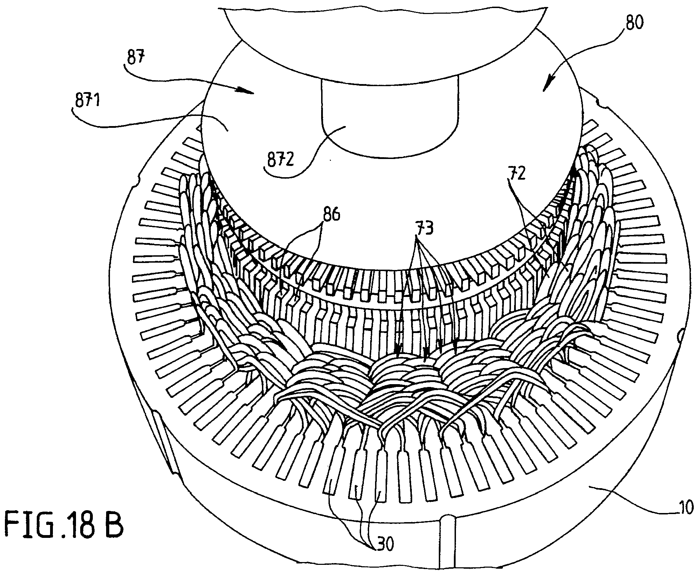

A l'étape 3/, l'insertion des enroulements 70 dans les encoches 30 est réalisée en disposant l'outil d'insertion 80 au centre du paquet de tôles 10 (figures 18A et 18B), de façon à ce que chaque fente radiale 84 se trouve en regard d'une encoche 30, et en forçant les spires 73 radialement dans les encoches 30 de l'intérieur vers l'extérieur.

A cet effet, les lames 86 sont déplacées radialement vers l'extérieur par les moyens 87 prévus dans ce but.

Comme le montre la figure 20, chaque lame 86 s'étend dans un plan radial par rapport à l'axe de l'outil 80 et comprend une partie centrale 861 engagée dans une des fentes radiales 84, et deux parties d'extrémité 862 prolongeant axialement la partie centrale 861 des deux côtés de la partie cylindrique 88.

Les parties d'extrémités 862 des lames 86 sont délimitées d'un côté radialement intérieur par des bords biseautés 863, de telle sorte que les bords biseautés 863 des différentes lames définissent de chaque côté de la partie cylindrique 88 un tronc de cône en creux 864, convergeant vers ladite partie cylindrique 88, coaxial à l'axe de symétrie de l'outil 80.

Les moyens 87 de déplacement des lames 86 comprennent deux poussoirs 871 en tronc de cône mobiles le long de l'axe de symétrie de l'outil 80, et des actionneurs 872 aptes à déplacer axialement lesdits poussoirs 871.

Les poussoirs 871 présentent des formes conjuguées à celles du tronc de cône en creux 864.

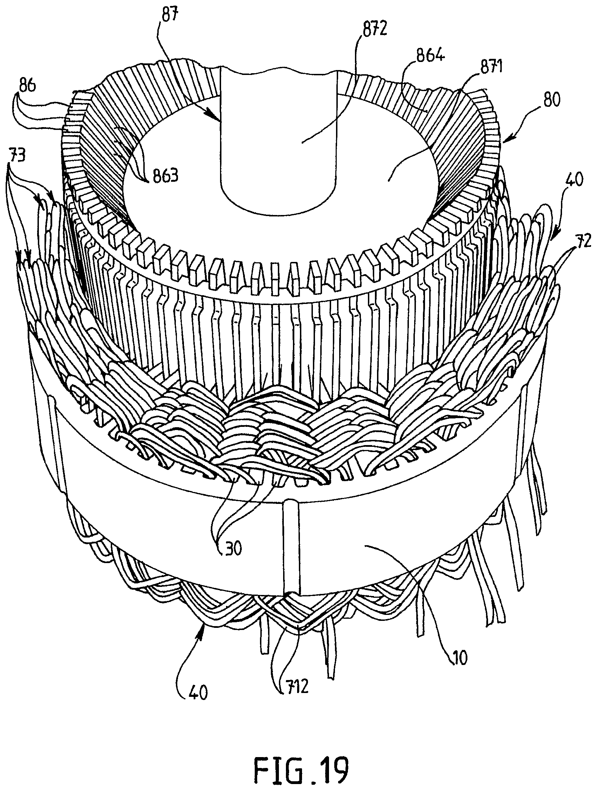

Les actionneurs 872 sont typiquement constitués de vérins pourvus chacun d'une tige mobile axialement, les poussoirs étant solidaires des tiges. Les vérins sont aptes à déplacer les tiges pour appliquer axialement les poussoirs 871 contre les bords biseautés 863 formant les troncs de cône en creux 864, ces poussoirs sollicitant ainsi les lames 86 dans le sens d'un écartement vers l'extérieur. Le déplacement des poussoirs et des lames est visible en comparant les figures 18B et 19.

Les parties centrales 861 des lames 86 poussent alors les branches latérales 711 des spires 73 dans les encoches 30, toutes les spires 73 étant ainsi mises en place sur le stator 1 en une seule opération (figure 19).

Dans ce mode de réalisation, le parallélisme des branches latérales 711 est particulièrement bien maîtrisé tout au long des différentes étapes. Ces branches sont maintenues parallèles sur le râtelier 90, puis dans les fentes radiales 84 de l'outil d'insertion 80, puis pendant le transfert à partir de l'outil vers les encoches 30.

Par ailleurs, les actionneurs 872 permettant d'écarter les lames 86 sont déportés et ne se trouvent pas au centre de l'outil 80. Ceci est un avantage important du fait que la taille des stators tend à se réduire.

Enfin, l'insertion radiale des spires permet de mettre en place les spires sans torsion de celles-ci pendant l'insertion, de telle sorte qu'elles ne se déforment pas en retour une fois l'insertion terminée.

Selon un autre aspect de l'invention particulièrement avantageux, les branches de tête 712 et les segments de liaison 72 formés à l'étape 1/ présentent des hauteurs axiales croissantes ou décroissantes le long des enroulements 70.

Les spires 73 destinées à être insérées les premières dans les encoches 30, et dont les branches latérales 711 sont insérées en positions radialement extérieures de fonds d'encoches 30, présentent en fin d'étape 1/ des branches de tête 712 et des segments de liaison 72 de hauteurs transversale relativement plus grandes que ceux des spires 73 dont les branches latérales 711 occupent des positions radialement intérieures.

Dans l'exemple de la figure 3, toutes les branches de tête 712 et les segments de liaison 72 d'une même spire 73 présentent une même hauteur.

Cette hauteur décroît régulièrement d'une spire 73 à la suivante le long du fil 60.

On a précisé plus haut que le pas polaire entre deux branches latérales 711 était le même tout au long de l'enroulement. Ceci est nécessaire de façon à ménager entre les branches 711 un écartement constant correspondant à l'écartement entre les ouvertures des encoches 30 dans lesquelles ces branches vont s'insérer.

La différence de hauteur entre les branches de tête 712 et les segments de liaison 72 des différentes spires 73 d'un même fil compense le fait que les branches latérales 711 successives d'une spire extérieure, disposées en fond d'encoches 30, sont mutuellement plus écartées que les branches latérales 711 d'une spire intérieure, dont les branches sont disposées en entrée d'encoches 30.

Une fois les spires insérées dans le paquet de tôles 10, la branche de tête 712 ou le segment de liaison 72 reliant les deux branches 711 extérieure sera plus ouvert que la branche de tête 712 ou le segment de liaison 72 reliant les deux branches 711 intérieure. Il subira du fait de son ouverture plus grande un aplatissement qui le ramènera à la même hauteur que la branche de tête 712 ou le segment de liaison 72 reliant les deux branches 711 intérieure.

On obtient ainsi des chignons dont tous les éléments présentent la même hauteur axiale, comme le montre la figure 2B.

La variation de hauteur transversale des spires 73 le long d'un fil 60 qui vient d'être décrite, et qui vise à compenser les différences d'écartement entre les branches 711 des spires extérieure et intérieure, peut être combinée à une autre variation de hauteur transversale des spires, destinée à obtenir des chignons étagés.

Cette autre variation, qui s'additionne à la première, fait que les branches de tête 712 ou les segments de liaison 72 d'un même chignon vont présenter une hauteur croissante ou décroissante de l'extérieur vers l'intérieur. Le stator de l'art antérieur représenté sur la figure 1A présente un tel étagement des branches de tête 712 et les segments de liaison 72 de ses chignons. Cette configuration des chignons favorise le refroidissement.

Un résultat approchant peut être obtenu à partir d'un stator dont les chignons sont constitués d'éléments de même hauteur, en ajoutant après l'étape 3/ une étape 4/ de mise en forme des chignons par inclinaison mécanique des segments de liaison 72 et/ou des branches de tête 712 vers l'intérieur ou vers l'extérieur.

Cette inclinaison est réalisée par exemple à l'aide d'un mors déplacé radialement vers l'intérieur ou l'extérieur et déformant les segments de liaison 72 et/ou les branches de tête 712.

Selon encore une autre caractéristique avantageuse, la méthode comprend, entre les étapes 1/ et 2/, une étape 1'/ de mise en forme locale du fil 60 dans des zones 61 de ce fil destinées à croiser d'autres fils 60, ou d'autres zones du même fil, une fois les enroulements 70 insérés dans le stator.

Ces zones 61 sont repérées par des cercles sur la figure 4.

La mise en forme locale du fil 60 consiste à déformer localement la section du fil 60, ou à courber localement le fil 60.

La déformation vise à aplatir localement la section, pour la rendre moins épaisse dans une direction déterminée, mais sans réduire la section totale de passage du courant. Les zones de croisement 61 des fils 60 sont superposées suivant ladite direction déterminée, de telle sorte que l'encombrement des deux fils 60 empilés est réduit. Dans le cas d'un fil 60 de section ronde, l'aplatissement conduit typiquement à former une section ovale.

L'aplatissement de la zone 61 peut être réalisé par pincement à l'aide de pinces adaptées, par matriçage dans une presse équipée d'un moule adapté, ou par moletage à l'aide d'un outil tournant.

Conférer une courbure locale à une zone 61 du fil 60 permet de décaler le point de croisement des fils en un endroit moins encombré du chignon 40, où l'espace disponible est suffisant pour permettre le croisement des fils 60.

Cette courbure est réalisée à l'aide de crochets déformant localement le fil par traction sur celui-ci.

On sait que le fil 60 présente typiquement une section ronde. De façon à faciliter le rangement des branches latérales 711 dans les encoches 30 et à augmenter la densité de cuivre dans ces encoches, on choisit pour ces encoches 30 une largeur circonférentielle multiple du diamètre du fil.

Cette largeur est typiquement égale à une fois ou deux fois le diamètre du fil 60. En variante la largeur de l'encoche est supérieure à deux fois le diamètre du fil, par exemple 3 ou 4 fois le diamètre.

Dans le cas où les encoches 30 présentent une largeur circonférentielle correspondant au diamètre du fil 60, la branche latérale 711 occupant la position la plus radialement intérieure, c'est-à-dire la plus proche de la périphérie interne du paque de tôles 10, est déformée par élargissement suivant une direction circonférentielle, comme le montre la figure 11A. Ladite branche latérale 711 est en appui sur les deux faces radiales opposées de l'encoche et est ainsi bloquée en position dans l'encoche 30. Les branches latérales 711 occupant les autres positions sont ainsi maintenues à l'intérieur de l'encoche 30.

Cette déformation est pratiquée après l'étape 3/ d'insertion, typiquement en trois points de la branche latérale 711. Elle conduit à transformer la section ronde du fil en une section ovale.

Dans le cas où les encoches 30 présentent une largeur circonférentielle égale à au moins deux diamètres du fil 60 (figure 11B), ces encoches 30 présentent d'un côté radialement interne une ouverture 31 partiellement obturée de deux côté opposés par deux redans axiaux 32, appelés également pieds de dents, faisant saillie à partir des dents 35. Les branches latérales 711 occupant chaque encoche 30 sont maintenues à l'intérieur de celle-ci par une cale plate 33 en appui sur les redans 32 d'un côté intérieur de l'encoche 30, comme le montre la figure 11B.

Cette cale 33 s'étend sur toute la longueur axiale de l'encoche 30 et présente une forme rectangulaire.

De préférence, la cale 33 est constituée d'une matière plastique chargée en une matière magnétique, notamment en fer, de façon à augmenter la surface d'échange stator/rotor.

Dans le cas d'une insertion radiale des spires dans les encoches, selon le second mode de réalisation de l'invention, il est possible de prévoir que l'ouverture 31 présente une largeur circonférentielle égale au diamètre du fil augmenté d'un jeu inférieur à 0,6 millimètres. Ceci est réalisable du fait de la grande précision du positionnement des branches latérales 711 des spires 73 au moment de leur transfert de l'outil d'insertion 80 vers les encoches 30. On augmente ainsi encore la surface d'échange stator/rotor. On choisira de préférence une ouverture 31 de largeur circonférentielle égale au diamètre du fil augmenté de 0,4 millimètres. Par comparaison, on choisit généralement dans l'art antérieur une largeur circonférentielle égale au diamètre du fil augmenté de 1 millimètres.

On notera que dans le cas d'encoches 30 de largeur correspondant à un diamètre de fil 60, il n'est pas nécessaire que les dents 35 portent des redans 33 et les cales 33 peuvent être supprimées. On simplifie ainsi la construction du paquet de tôles 10 et le procédé d'insertion des enroulements 70 dans les encoches 30.

Enfin, toujours dans le souci de faciliter le rangement des branches latérales 711 dans les encoches 30, les encoches 30 peuvent présenter une profondeur radiale multiple du diamètre du fil 60.

Comme le montrent les figures 11A et 11B, les dimensions choisies pour les encoches 30 font que les branches latérales 711 du fil 60 viennent normalement se ranger en plusieurs alignements radiaux bien ordonnés à l'étape 3/ d'insertion dans les encoches 30.

On peut encore souligner que dans le cas d'un stator hexaphasé, dont le bobinage comprend six enroulements de phase 70 constitué d'un fil 60 chacun, répartis trois paires, il est particulièrement intéressant de prévoir que la position sur le stator des spires 73 d'un fil 60 d'une même paire donnée se déduit de la position des spires 73 de l'autre fil 60 de la même paire par une rotation correspondant à un décalage d'une encoche 30, et que la position des spires 73 des fils 60 d'une paire se déduit de la position des spires 73 des fils 60 d'une autre paire par une rotation correspondant à un décalage de deux ou quatre encoches 30.

Dans le cas où l'insertion des spires 73 dans les encoches 30 est réalisée radialement, cette disposition des spires 73 sur le stator correspond à la disposition des enroulements 70 sur le râtelier illustrée sur la figure 15.

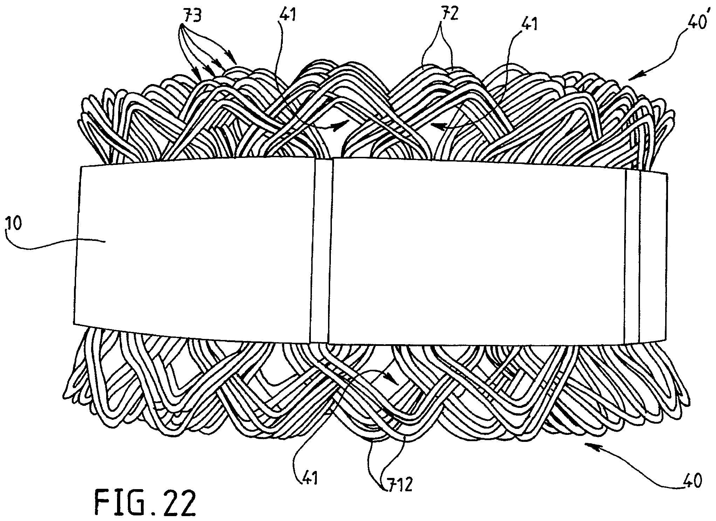

Elle permet d'obtenir des chignons particulièrement bien aérés, tels que ceux représentés sur la figure 22. On voit sur cette figure que les branches de têtes et les segments de liaison de chaque paire de phase forment de larges couloirs 41 de circulation pour l'air de refroidissement, s'étendant radialement, ces couloirs 41 étant répartis autour du stator.

On comprend donc bien que la méthode décrite ci-dessus procure de multiples avantages.

Le temps de cycle est court puisque l'insertion de tous les enroulements de phase est réalisée en une seule opération.

Par ailleurs, les opérations de préparation des enroulements sont particulièrement minutieuses et soignées. Les étapes 1/ et 1'/ permettent, à l'issue de l'étape 3/ d'insertion, d'obtenir des chignons bien ordonnés, présentant peu de défauts. Les opérations avales de contrôle qualité et de correction des défauts sont grandement accélérées, et le temps de cycle est réduit.

Dans le cas de l'insertion axiale, la formation des chignons se fait en bon ordre du fait que l'effort de poussée du champignon est bien transmis des spires disposées en bas sur l'outil d'insertion aux spires disposées en haut. Cet effort est réparti de façon régulière sur toute la circonférence de l'outil.

De plus, toujours dans le cas de l'insertion axiale, la méthode est adaptée aux outillages existants et ne demande que peu de modifications de ceux-ci.

Dans le cas de l'insertion radiale, le parallélisme des branches latérales 711 est particulièrement bien maîtrisé tout au long des différentes étapes. De plus, les spires ne subissent aucune déformation pendant l'étape d'insertion autre qu'un léger aplatissement des branches de tête et des segments de liaison cintrés. De ce fait, le positionnement des spires et la forme des chignons sont particulièrement bien maîtrisés.

Par ailleurs, la position des actionneurs 872, déportés axialement, permet de traiter des stator de particulièrement petit diamètre.

Les stators conformes à l'invention présentent également des avantages.

Du fait de l'alternance des spires des différents enroulements dans l'ordre d'insertion, les chignons sont particulièrement aérés. Le refroidissement des chignons est ainsi grandement facilité. Le débit d'air de refroidissement à travers les chignons peut alors dépasser 10 litres par seconde.

Les fils conducteurs étant, de manière précitée, en cuivre, la densité de cuivre dans les encoches peut être augmentée jusqu'à 65%, cette densité étant le rapport entre la surface de la section des branches latérales non isolées sur la section de l'encoche non isolée. Cette densité est limitée à 45 à 50% dans les stators de l'art antérieur.

Ce résultat est l'effet combiné de plusieurs aspects de l'invention.

Il est obtenu d'abord du fait que l'insertion des branches latérales dans les encoches se fait de façon ordonnée.

Il résulte également de la bonne préparation des zones de croisement des fils, qui permet de bien ranger le chignon et donc de bien optimiser la position des branches latérales 711 dans les encoches.

Enfin, le choix des dimensions des encoches, la suppression des cales ou l'utilisation de cales de forme rectangulaire en remplacement des cales en U de l'art antérieur, participent également à l'obtention de ce résultat.

On notera que, dans le cas de l'insertion axiale, le positionnement sensiblement vertical des créneaux des spires sur l'outil d'insertion permet de ne pratiquement pas déformer les fils pendant l'insertion. Ainsi, les zones de croisement 61, qui subissent une mise en forme particulière avant insertion, ne sont pas déformées et viennent s'ordonner correctement dans les chignons du rotor.

Cette remarque est vraie également dans le cas de l'insertion radiale, puisque les spires ne subissent pratiquement aucune déformation pendant l'insertion.

La méthode décrite ci-dessus est adaptée à des stators comprenant un nombre quelconque d'encoches et à des bobinages comprenant un nombre quelconque d'enroulements de phase. Elle est particulièrement adaptée à un stator comprenant de 36 à 96 encoches, correspondant à un rotor de 12 à 16 pôles, et à un bobinage comprenant de 3 à 6 enroulements de phase.

La méthode est adaptée à tous les diamètres de fil et tous les diamètres de stators usuels pour les stators d'alternateur de véhicules automobiles.

On appréciera que le stator selon l'invention est avantageusement destiné à être monté dans un alternateur à ventilateur interne tel que décrit par exemple dans le document EP-A-0515 259. Un tel alternateur comporte un stator entourant un rotor, par exemple un rotor à griffes ou un rotor à pôles saillants.

Le rotor est solidaire d'un arbre monté à rotation centralement par l'intermédiaire de roulements à billes dans un carter en deux parties appelés palier avant et palier arrière. Les paliers sont creux et présentent chacun un fond doté d'ouvertures, pour formation d'entrées d'air, et un rebord périphérique également doté d'ouvertures pour formation de sortie d'air. Les fonds des paliers sont globalement d'orientation transversale et portent centralement un roulement à billes pour le montage à rotation de l'arbre de support du rotor. Les fonds sont prolongés à leur périphérie extérieure chacun par le rebord périphérique globalement d'orientation axiale et épaulé pour montage du corps du stator portant le bobinage à pluralité d'enroulements de phase dont les chignons s'étendent en saillie axiale de part et d'autre du corps du stator et ce en dessous des ouvertures des rebords périphériques des paliers assemblés par exemple à l'aide de vis ou de tirants, pour formation du carter de logement du stator et du rotor. Le rotor porte à au moins l'une de ses extrémités axiales un ventilateur implanté radialement en dessous du chignon concerné. Le palier arrière porte au moins un porte balais, tandis qu'une poulie, solidaire de l'arbre de support du rotor, est adjacente au palier avant. Pour les autres constituants de l'alternateur on se reportera au document précité, sachant que le rotor à griffes et à bobinage d'excitation peut être remplacé par un stator à pôles saillants portant plusieurs bobinages d'excitation. Un pont redresseur, par exemple à diodes, est relié aux enroulements des phases. En variante ce pont redresseur est conformé pour former également un onduleur, comme décrit par exemple dans le document FR-A-2 745 444, pour injecter du courant dans les enroulements de phase du stator afin de faire fonctionner l'alternateur en moteur électrique notamment pour démarrer le moteur thermique du véhicule automobile, un tel alternateur tant appelé alterno-démarreur.

Dans tous les cas, lorsque l'arbre de support du rotor tourne, le ou les ventilateurs permettent de créer un courant d'air entre les ouvertures d'entrée et de sortie d'air traversant les chignons du bobinage selon l'invention. Plus précisément, l'étape de préparation des fils séparément, puis l'étape d'organisation des enroulements de phase avant leur insertion dans les encoches permet de donner aux têtes, appelées chignons, du bobinage du stator des caractéristiques symétriques permettant de créer dans les chignons des orifices de passage d'air et des pentes qui améliorent la circulation de l'air au travers des chignons, par exemple au dessus de 10 litres par seconde.

Bien entendu, un chignon peut être en variante plus haut axialement que l'autre grâce à l'outil selon l'invention.

Bien entendu, les isolants d'encoche sont placés et avantageusement fixés dans les encoches avant les insertions des fils dans les encoches. Dans les figures 11A et 11B on n'a pas représenté par simplicité l'isolant d'encoche visible dans les figures 1A, 2B, 9 et 11C.

La section des fils conducteurs peut être ronde, comme dans les figures, ou carrée, ou rectangulaire ou elliptique ou autre.

Le corps du stator est dans les figures de forme cylindrique. En variante la périphérie extérieure du corps du stator est de forme non cylindrique par exemple en forme de tonneau. Les encoches, formées dans chaque tôle du paquet de tôles sont en variante inclinées par rapport à la direction axiale.

Grâce à l'invention la machine électrique tournante polyphasée équipée du stator à bobinage selon l'invention est plus puissante.

## Revendications

1. Méthode d'insertion d'un bobinage ondulé dans un stator d'une machine électrique tournante polyphasée, telle qu'un d'alternateur ou un alterno-démarreur de véhicule automobile, le stator (1) comprenant un paquet de tôles (10) troué centralement et présentant un axe de symétrie (20) et des encoches (30) axialement traversantes ménagées dans une face radialement interne du paquet de tôles (10), le bobinage comprenant une pluralité d'enroulements de phase (70) constitués chacun d'au moins un fil (60) continu électriquement conducteur, chaque fil étant destiné à former autour de la face interne du paquet de tôles (10) une spirale comprenant plusieurs spires (73) correspondant chacune à un tour de la face interne, la méthode comprenant les étapes suivantes :
1/ mise en forme de chaque enroulement (70), chaque fil (60) de celui-ci étant conformé en une succession de créneaux (71) reliés par des segments de liaison (72), chaque créneau comprenant deux branches latérales (711) en regard l'une de l'autre destinées à s'insérer chacune dans une encoche (30), et une branche de tête (712) reliant les deux branches latérales (711) ;
3/ insertion des spires (73) de chaque fil dans une série d'encoches (30) du stator, les spires (73) des différents fils (60) se superposant radialement dans un ordre prédéterminé,
**caractérisée en ce que** les fils (60) de tous les enroulements (70) sont insérés dans les encoches (30) en même temps, les spires (73) des différents fils (60) alternant dans l'ordre prédéterminé de superposition, et **en ce que** l'ordre prédéterminé de superposition comprend une succession de séquences identiques, chaque séquence étant constituée d'une spire (73) de chaque fil (60).

2. Méthode selon la revendication 1 ou 2, **caractérisée en ce que** les encoches (30) offrent une pluralité de positions de réception étagées radialement, les branches latérales (711) des spires (73) se superposant de l'intérieur vers l'extérieur dans ledit ordre prédéterminé occupant progressivement des positions de réception radialement plus extérieures dans les encoches (30).

3. Méthode selon l'une quelconque des revendications 1 à 3, **caractérisée en ce que** les branches latérales (711) d'un même créneau (71) sont sensiblement droites et mutuellement parallèles.

4. Méthode selon l'une quelconque des revendications précédentes, **caractérisée en ce que** les branches de tête (712) des créneaux (71) sont cintrées et forment un chignon (40) d'un premier côté axial du stator (1).

5. Méthode selon la revendication 5, **caractérisée en ce que** les segments de liaison (72) relient deux branches latérales (711) respectives de deux créneaux (71) voisins le long du fil (60) et présentent une forme cintrée, ces segments formant un chignon (40') d'un second côté axial du stator (1) opposé au premier.

6. Méthode selon la revendication 6, **caractérisée en ce que** les branches de tête (712) et/ou les segments de liaison (72) formés à l'étape 1/ présentent des hauteurs croissantes ou décroissantes le long des fils (60).

7. Méthode selon la revendication 7, **caractérisée en ce que** les spires (73) dont les branches latérales (711) sont insérées en positions radialement extérieures de fonds d'encoches (30) présentent des branches de tête (712) et/ou des segments de liaison (72) de hauteurs relativement plus grandes que les spires (73) dont les branches latérales (711) sont insérées en positions radialement intérieures.

8. Méthode selon l'une quelconque des revendications 6 à 8, **caractérisée en ce qu'**elle comprend après l'étape 3/ une étape 4/ de mise en forme des chignons (40, 40') par inclinaison des segments de liaison (72) et/ou des branches de tête (712) vers l'intérieur.

9. Méthode selon l'une quelconque des revendications 6 à 8, **caractérisée en ce qu'**elle comprend après l'étape 3/ une étape 4/ de mise en forme des chignons (40, 40') par inclinaison des segments de liaison (72) et/ou des branches de tête (712) vers l'extérieur.

10. Méthode selon l'une quelconque des revendications 1 à 10, **caractérisée en ce qu'**elle comprend, d'après l'étape 1/, une étape 1'/ de mise en forme locale du fil (60) dans des zones (61) de ce fil destinées à croiser d'autres fils (60), ou d'autres zones du même fil (60), une fois les enroulements (70) insérés dans le stator (1) .

11. Méthode selon la revendication 11, **caractérisée en ce que** les encoches (30) présentent une largeur circonférentielle correspondant au diamètre du fil (60), la branche latérale (711) occupant la position la plus radialement intérieure étant déformée par élargissement suivant une direction circonférentielle de manière à maintenir les branches latérales (711) occupant les autres positions à l'intérieur de l'encoche (30).

12. Méthode selon la revendication 11, **caractérisée en ce que** les encoches (30) présentent une largeur circonférentielle égale à au moins deux diamètres du fil (60) et présentent d'un côté radialement interne une ouverture (31) partiellement obturée de deux côté opposés par deux redans axiaux (32), les branches latérales (711) occupant les encoches étant maintenues à l'intérieur de celle-ci par une cale plate (33) en appui sur les redans (32) d'un côté intérieur de l'encoche (30) .

13. Méthode selon la revendication 13, **caractérisée en ce que** la cale (33) est constituée d'une matière plastique chargée en une matière magnétique, notamment en fer.

14. Méthode selon l'une quelconque des revendications 1 à 14, **caractérisée en ce qu'**elle comprend, entre les étapes 1/ et 3/, l'étape 2/ suivante :
2/ mise en place des fils (60) sur un outil d'insertion (80) cylindrique, les spires (73) des fils (60) s'enroulant autour de l'outil d'insertion (80) en se superposant radialement de l'intérieur vers l'extérieur dans ledit ordre prédéterminé.

15. Méthode selon la revendication 15, **caractérisée en ce que**, sur l'outil d'insertion (80), les créneaux (71) s'étendent dans des plans respectifs parallèles à l'axe de symétrie de l'outil d'insertion (80), ou faiblement inclinés par rapport à cet axe.

16. Méthode selon la revendication 16, **caractérisée en ce que** l'étape 3/ d'insertion des enroulements (70) dans les encoches (30) est réalisée par déplacement de l'outil d'insertion (80) le long de l'axe de symétrie (20) du stator (1).

17. Méthode selon la revendication 16, **caractérisée en ce que** l'étape 3/ d'insertion des enroulements (70) dans les encoches (30) est réalisée en disposant l'outil d'insertion (80) au centre du paquet de tôles (10) et en forçant les spires (73) radialement dans les encoches (30) de l'intérieur vers l'extérieur.

18. Méthode selon la revendication 18, **caractérisée en ce que** l'outil d'insertion (80) comprend une pluralité de fentes radiales (84) ménagées sur une face radialement extérieure (85) de l'outil (80) et s'étendant dans des plans radiaux respectifs régulièrement répartis autour d'un axe de symétrie de l'outil (80), une pluralité de lames (86) disposées dans les fentes radiales (84), et des moyens de déplacement des lames (86) radialement de l'intérieur vers l'extérieur dans les fentes radiales (84), les branches latérales (711) des spires (73) venant s'insérer dans les fentes radiales (84) à l'étape 2/ d'un côté radialement extérieur des lames (86), les lames (86) étant déplacés radialement vers l'extérieur à l'étape 3/ de façon à transférer les branches latérales (711) des fentes radiales (84) dans les encoches (30).

19. Méthode selon la revendication 19, **caractérisée en ce que**, à l'étape 1/, après mise en forme des fils (60) des enroulements (70) en une succession de créneaux (71) alignés longitudinalement, les fils (60) de tous les enroulements (70) sont empilés à plat sur un râtelier (90) longitudinal rectiligne dans lequel sont ménagées des fentes transversales (92) mutuellement parallèles, les branches latérales (711) des créneaux (71) de chaque fil (60) venant s'insérer dans une série de fentes transversale (92).

20. Méthode selon la revendication 20, **caractérisée en ce que**, à l'étape 2/, l'empilement formé par les fils (60) des enroulements (70) est enroulé à partir du râtelier (90) autour de l'outil d'insertion (80).

21. Méthode selon l'une quelconque des revendications précédentes, **caractérisée en ce que** le bobinage comprend six fils (60) répartis en trois paires, la position des spires (73) d'un fil (60) d'une paire donnée se déduisant de la position des spires (73) de l'autre fil (60) de la même paire par une rotation correspondant à un décalage d'une encoche (30).

22. Stator de machine électrique tournante polyphasée, telle qu'un alternateur ou un alterno-démarreur de véhicule automobile, ce stator (1) comprenant un paquet de tôles (10) troué centralement présentant un axe de symétrie (20), des encoches (30) axialement traversantes ménagées dans une face radialement interne du paquet de tôles (10), et un bobinage (50) comprenant une pluralité d'enroulements de phase (70) constitués chacun d'au moins un fil (60) continu électriquement conducteur, chaque fil (60) formant autour de la face interne du paquet de tôles (10) une spirale comprenant plusieurs spires (73) correspondant chacune à un tour de la face interne ; chaque fil (60) étant conformé en une succession de créneaux (71) reliés par des segments de liaison (72), chaque créneau comprenant deux branches latérales (711) venant s'insérer chacune dans une encoche (30), et une branche de tête (712) reliant les deux branches latérales (711);
les spires (73) se superposant radialement dans un ordre prédéterminé ;
**caractérisé en ce que** les spires (73) alternent dans l'ordre prédéterminé de superposition, et **en ce que** l'ordre de superposition prédéterminé comprend une succession de séquences identiques, chaque séquence étant constituée d'une spire (73) de chaque fil (60).

23. Stator selon la revendication 23 ou 24, **caractérisé en ce que** les encoches (30) offrent une pluralité de positions de réception étagées radialement, les branches latérales (711) des spires (73) se superposant de l'intérieur vers l'extérieur dans ledit ordre prédéterminé occupant progressivement des positions de réception radialement plus extérieures dans les encoches (30).

24. Stator selon l'une quelconque des revendications 23 à 25, **caractérisé en ce que** les branches latérales (711) de chaque créneau (71) sont sensiblement droites et mutuellement parallèles.

25. Stator selon l'une quelconque des revendications 23 à 26, **caractérisé en ce que** les branches de tête (712) des créneaux (71) sont cintrées et forment un chignon (40) d'un premier côté axial du stator (1).

26. Stator selon la revendication 27, **caractérisé en ce que** les segments de liaison (72) relient deux branches latérales (711) respectives de deux créneaux (71) voisins le long du fil (60) et présentent une forme cintrée, ces segments formant un chignon (40') d'un second côté axial du stator (1) opposé au premier.

27. Stator selon la revendication 28, **caractérisé en ce que** les segments de liaison (72) et/ou les branches de tête (712) constituant les chignons (40, 40') sont inclinés vers l'intérieur.

28. Stator selon la revendication 28, **caractérisé en ce que** les segments de liaison (72) et/ou les branches de tête (712) constituant les chignons (40, 40') sont inclinés vers l'extérieur.

29. Stator selon l'une quelconque des revendications 23 à 30, **caractérisé en ce que** le fil (60) est mis en forme localement dans des zones (61) de ce fil croisant d'autres fils (60) ou d'autres zones du même fil (60).

30. Stator selon l'une des revendications 23 à 31, **caractérisé en ce que** les encoches (30) présentent une largeur circonférentielle correspondant au diamètre du fil (60), la branche latérale (711) occupant la position la plus radialement intérieure étant déformée par élargissement suivant une direction circonférentielle de manière à maintenir les branches latérales (711) occupant les autres positions à l'intérieur de l'encoche (30).

31. Stator selon l'une des revendications 23 à 31, **caractérisé en ce que** les encoches (30) présentent une largeur circonférentielle égale à au moins deux diamètres du fil (60) et présentent d'un côté radialement interne une ouverture (31) partiellement obturée de deux côté opposés par deux redans axiaux (32), les branches latérales (711) occupant les encoches (30) étant maintenues à l'intérieur de celle-ci par une cale plate (33) en appui sur les redans (32) d'un côté intérieur de l'encoche (30) .

32. Stator selon la revendication 33, **caractérisé en ce que** la cale (33) est constituée d'une matière plastique chargée en une matière magnétique, notamment en fer.

33. Stator selon l'une quelconque des revendications 23 à 34, **caractérisé en ce que** le bobinage comprend six fils (60) répartis en trois paires, la position des spires (73) d'un fil (60) d'une paire donnée se déduisant de la position des spires (73) de l'autre fil (60) de la même paire par une rotation correspondant à un décalage d'une encoche (30) .

34. Stator selon la revendication 35, **caractérisé en ce que** la position des spires (73) des fils (60) d'une paire se déduit de la position des spires (73) des fils (60) d'une autre paire par une rotation correspondant à un décalage de quatre encoches (30).

35. Stator selon la revendication 35, **caractérisé en ce que** la position des spires (73) des fils (60) d'une paire se déduit se déduit de la position des spires (73) des fils (60) d'une autre paire par une rotation correspondant à un décalage de deux encoches (30).

## Patentansprüche

1. Verfahren zum Einlegen einer gewellten Spule in einen Stator einer rotierenden elektrischen Polyphasenmaschine, wie ein Wechselstromgenerator oder ein Anlassergenerator für Kraftfahrzeuge, wobei der Stator (1) ein Blechpaket (10) aufweist, das in der Mitte gelocht ist und eine Symmetrieachse (20) und axial durchgehende Nuten (30) aufweist, die in einer radial inneren Seite des Blechpakets (10) ausgebildet sind, wobei die Spule mehrere Phasenwicklungen (70) aufweist, die jeweils aus mindestens einem elektrisch leitenden Endlosdraht (60) gebildet sind, wobei jeder Draht dazu bestimmt ist, um die Innenseite des Blechpakets (10) herum eine Spirale mit mehreren Windungen (73) zu bilden, die jeweils einer Umdrehung der Innenseite entsprechen, wobei das Verfahren die folgenden Schritte aufweist:
1/ Formen von jeder Wicklung (70), wobei jeder Draht (60) von dieser als eine Abfolge von Auszackungen (71) gebildet wird, die durch Verbindungssegmente (72) verbunden werden, wobei jede Auszackung zwei seitliche Schenkel (711), die einander gegenüberliegen, die dazu bestimmt sind, jeweils in eine Nut (30) eingefügt zu werden, und einen Kopfschenkel (712) aufweist, der die zwei seitlichen Schenkel (711) verbindet;
3/ Einfügen der Windungen (73) von jedem Draht in eine Reihe von Nuten (30) des Stators, wobei die Windungen (73) der verschiedenen Drähte (60) in einer vorbestimmten Reihenfolge radial überlagert werden,
**dadurch gekennzeichnet, dass** die Drähte (60) aller Wicklungen (70) gleichzeitig in die Nuten (30) eingefügt werden, wobei sich die Windungen (73) der verschiedenen Drähte (60) in der vorbestimmen Reihenfolge der Überlagerung abwechseln, und dadurch, dass die vorbestimme Reihenfolge der Überlagerung eine Abfolge von identischen Sequenzen aufweist, wobei jede Sequenz durch eine Windung (73) von jedem Draht (60) gebildet wird.

2. Verfahren nach Anspruch 1 oder 2, **dadurch gekennzeichnet, dass** die Nuten (30) mehrere radial abgestufte Aufnahmepositionen bieten, wobei sich die seitlichen Schenkel (711) der Windungen (73) in der vorbestimmten Reihenfolge von innen nach außen überlagern und dabei nach und nach radial weiter äußere Aufnahmepositionen in den Nuten (30) einnehmen.

3. Verfahren nach einem der Ansprüche 1 bis 3, **dadurch gekennzeichnet, dass** die seitlichen Schenkel (711) einer gleichen Auszackung (71) im Wesentlichen gerade und zueinander parallel sind.

4. Verfahren nach einem der vorhergehenden Ansprüche, **dadurch gekennzeichnet, dass** die Kopfschenkel (712) der Auszackungen (71) gewölbt sind und einen Wicklungskopf (40) auf einer ersten axialen Seite des Stators (1) bilden.

5. Verfahren nach Anspruch 5, **dadurch gekennzeichnet, dass** die Verbindungssegmente (72) jeweils zwei seitliche Schenkel (711) von zwei benachbarten Auszackungen (71) entlang des Drahtes (60) verbinden und eine gewölbte Form aufweisen, wobei diese Segmente einen Wicklungskopf (40') auf einer zweiten axialen Seite des Stators (1), die der ersten Seite entgegengesetzt ist, bilden.

6. Verfahren nach Anspruch 6, **dadurch gekennzeichnet, dass** die Kopfschenkel (712) und/oder die Verbindungssegmente (72), die in Schritt 1/ gebildet werden, zunehmende oder abnehmende Höhen entlang den Drähten (60) aufweisen.

7. Verfahren nach Anspruch 7, **dadurch gekennzeichnet, dass** die Windungen (73), deren seitliche Schenkel (711) in radial äußere Positionen von Nutenböden (30) eingefügt werden, Kopfschenkel (712) und/oder Verbindungssegmente (72) mit relativ größeren Höhen als die Windungen (73) aufweisen, deren seitliche Schenkel (711) in radial innere Positionen eingefügt werden.

8. Verfahren nach einem der Ansprüche 6 bis 8, **dadurch gekennzeichnet, dass** es nach dem Schritt 3/ einen Schritt 4/ zum Formen der Wicklungsköpfe (40, 40') durch Neigen der Verbindungssegmente (72) und/oder der Kopfschenkel (712) nach innen aufweist.

9. Verfahren nach einem der Ansprüche 6 bis 8, **dadurch gekennzeichnet, dass** es nach dem Schritt 3/ einen Schritt 4/ zum Formen der Wicklungsköpfe (40, 40') durch Neigen der Verbindungssegmente (72) und/oder der Kopfschenkel (712) nach außen aufweist.

10. Verfahren nach einem der vorhergehenden Ansprüche 1 bis 10, **dadurch gekennzeichnet, dass** es nach dem Schritt 1/ einen Schritt 1'/ zum örtlichen Formen des Drahtes (60) in Bereichen (61) dieses Drahtes aufweist, die dazu bestimmt sind, andere Drähte (60) oder andere Bereiche desselben Drahtes (60) zu kreuzen, nachdem die Wicklungen (70) in den Stator (1) eingefügt sind.

11. Verfahren nach Anspruch 11, **dadurch gekennzeichnet, dass** die Nuten (30) eine Umfangsbreite, die dem Durchmesser des Drahts (60) entspricht, aufweisen, wobei der seitliche Schenkel (711), der die radial am weitesten innen gelegene Position einnimmt, durch Verbreiterung entlang einer Umfangsrichtung derart verformt wird, dass die seitlichen Schenkel (711), die die anderen Positionen einnehmen, im Innern der Nut (30) gehalten werden.

12. Verfahren nach Anspruch 11, **dadurch gekennzeichnet, dass** die Nuten (30) eine Umfangsbreite, die mindestens gleich zwei Durchmessern des Drahtes (60) ist, und auf einer radial inneren Seite eine Öffnung (31) aufweisen, die auf zwei gegenüberliegenden Seiten teilweise durch zwei axiale Absätze (32) verschlossen wird, wobei die seitlichen Schenkel (711), die die Nuten einnehmen, durch einen flachen Keil (33), der auf den Absätzen (32) auf einer inneren Seite der Nut (30) zur Anlage kommt, im Innern dieser Nut gehalten werden.

13. Verfahren nach Anspruch 13, **dadurch gekennzeichnet, dass** der Keil (33) aus einem Kunststoffmaterial gebildet wird, das mit einem magnetischen Material, insbesondere Eisen, gefüllt wird.

14. Verfahren nach einem der Ansprüche 1 bis 14, **dadurch gekennzeichnet, dass** es zwischen den Schritten 1/ und 3/ den folgenden Schritt 2/ aufweist:
2/ Anbringen der Drähte (60) auf einem zylindrischen Einfügwerkzeug (80), wobei die Windungen (73) der Drähte (60) um das Einfügwerkzeug (80) herum gewickelt werden, indem sie radial von innen nach außen in der vorbestimmten Reihenfolge überlagert werden.

15. Verfahren nach Anspruch 15, **dadurch gekennzeichnet, dass** sich die Auszackungen (71) auf dem Einfügwerkzeug (80) in Ebenen erstrecken, die jeweils parallel zur Symmetrieachse des Einfügwerkzeugs (80) verlaufen oder im Verhältnis zu dieser Achse leicht geneigt sind.

16. Verfahren nach Anspruch 16, **dadurch gekennzeichnet, dass** der Schritt 3/ zum Einfügen der Wicklungen (70) in die Nuten (30) durch Verschieben des Einfügwerkzeugs (80) entlang der Symmetrieachse (20) des Stators (1) durchgeführt wird.

17. Verfahren nach Anspruch 16, **dadurch gekennzeichnet, dass** der Schritt 3/ zum Einfügen der Wicklungen (70) in die Nuten (30) durch Anordnen des Einfügwerkzeugs (80) in der Mitte des Blechpakets (10) und durch Drücken der Windungen (73) radial in die Nuten (30) von innen nach außen durchgeführt wird.

18. Verfahren nach Anspruch 18, **dadurch gekennzeichnet, dass** das Einfügwerkzeug (80) mehrere radiale Schlitze (84), die auf einer radial äußeren Seite (85) des Werkzeugs (80) angeordnet sind und sich in radialen Ebenen erstrecken, die jeweils gleichmäßig um eine Symmetrieachse des Werkzeugs (80) verteilt sind, mehrere Klingen (86), die in den radialen Schlitzen (84) angeordnet sind, und Mittel zum Verschieben der Klingen (86) radial von innen nach außen in den radialen Schlitzen (84) aufweist, wobei die seitlichen Schenkel (711) der Windungen (73) in die radialen Schlitze (84) in dem Schritt 2/ auf einer radial äußeren Seite der Klingen (86) eingefügt werden, wobei die Klingen (86) in dem Schritt 3/ radial nach außen derart verschoben werden, um die seitlichen Schenkel (711) von den radialen Schlitzen (84) in die Nuten (30) zu verschieben.

19. Verfahren nach Anspruch 19, **dadurch gekennzeichnet, dass** in dem Schritt 1/ nach dem Formen der Drähte (60) der Wicklungen (70) in einer Abfolge von Auszackungen (71), die in Längsrichtung ausgerichtet sind, die Drähte (60) aller Wicklungen (70) flach auf einen längsverlaufenden geradlinigen Spulenhalter (90) gestapelt werden, in dem Querschlitze (92) angeordnet sind, die gegenseitig parallel sind, wobei die seitlichen Schenkel (711) der Auszackungen (71) von jedem Draht (60) in eine Reihe von Querschlitzen (92) eingefügt werden.

20. Verfahren nach Anspruch 20, **dadurch gekennzeichnet, dass** in dem Schritt 2/ der Stapel, der durch die Drähte (60) der Wicklungen (70) gebildet wird, ausgehend von dem Spulenhalter (90) um das Einfügwerkzeug (80) gewickelt wird.

21. Verfahren nach einem der vorhergehenden Ansprüche, **dadurch gekennzeichnet, dass** die Spule sechs Drähte (60) aufweist, die in drei Paare aufgeteilt sind, wobei die Position der Windungen (73) eines Drahtes (60) eines bestimmten Paares aus der Position der Windungen (73) des anderen Drahtes (60) des gleichen Paares durch eine Drehung, die einer Verschiebung um eine Nut (30) entspricht, abgeleitet wird.

22. Stator einer rotierenden elektrischen Polyphasenmaschine, wie ein Wechselstromgenerator oder ein Anlassergenerator für Kraftfahrzeuge, wobei dieser Stator (1) ein Blechpaket (10), das in der Mitte gelocht ist und eine Symmetrieachse (20) aufweist, axial durchgehende Nuten (30), die in einer radial inneren Seite des Blechpakets (10) ausgebildet sind, und eine Spule (50) aufweist, die mehrere Phasenwicklungen (70) aufweist, die jeweils aus mindestens einem elektrisch leitenden Endlosdraht (60) gebildet sind, wobei jeder Draht (60) um die Innenseite des Blechpakets (10) eine Spirale mit mehreren Windungen (73) bildet, die jeweils einer Umdrehung der Innenseite entspricht; wobei jeder Draht (60) als eine Abfolge von Auszackungen (71) gebildet ist, die durch Verbindungssegmente (72) verbunden sind, wobei jede Auszackung zwei seitliche Schenkel (711), die jeweils in eine Nut (30) eingefügt sind, und einen Kopfschenkel (712) aufweist, der die zwei seitlichen Schenkel (711) verbindet;
wobei sich die Windungen (73) in einer vorbestimmten Reihenfolge radial überlagern; **dadurch gekennzeichnet, dass** sich die Windungen (73) in der vorbestimmen Reihenfolge der Überlagerung abwechseln und dass die vorbestimme Reihenfolge der Überlagerung eine Abfolge von identischen Sequenzen aufweist, wobei jede Sequenz durch eine Windung (73) von jedem Draht (60) gebildet ist.

23. Stator nach Anspruch 23 oder 24, **dadurch gekennzeichnet, dass** die Nuten (30) mehrere radial abgestufte Aufnahmepositionen bieten, wobei sich die seitlichen Schenkel (711) der Windungen (73) in der vorbestimmten Reihenfolge von innen nach außen überlagern und dabei nach und nach radial weiter äußere Aufnahmepositionen in den Nuten (30) einnehmen.

24. Stator nach einem der Ansprüche 23 bis 25, **dadurch gekennzeichnet, dass** die seitlichen Schenkel (711) von jeder Auszackung (71) im Wesentlichen gerade und zueinander parallel sind.

25. Stator nach einem der Ansprüche 23 bis 26, **dadurch gekennzeichnet, dass** die Kopfschenkel (712) der Auszackungen (71) gewölbt sind und einen Wicklungskopf (40) auf einer ersten axialen Seite des Stators (1) bilden.

26. Stator nach Anspruch 27, **dadurch gekennzeichnet, dass** die Verbindungssegmente (72) jeweils zwei seitliche Schenkel (711) von zwei benachbarten Auszackungen (71) entlang des Drahtes (60) verbinden und eine gewölbte Form aufweisen, wobei diese Segmente einen Wicklungskopf (40') auf einer zweiten axialen Seite des Stators (1), die der ersten Seite entgegengesetzt ist, bilden.

27. Stator nach Anspruch 28, **dadurch gekennzeichnet, dass** die Verbindungssegmente (72) und/oder die Kopfschenkel (712), die die Wicklungsköpfe (40, 40') bilden, nach innen geneigt sind.

28. Stator nach Anspruch 28, **dadurch gekennzeichnet, dass** die Verbindungssegmente (72) und/oder die Kopfschenkel (712), die die Wicklungsköpfe (40, 40') bilden, nach außen geneigt sind.

29. Stator nach einem der Ansprüche 23 bis 30, **dadurch gekennzeichnet, dass** der Draht (60) örtlich in Bereichen (61) dieses Drahtes geformt ist, die andere Drähte (60) oder andere Bereiche desselben Drahtes (60) kreuzen.

30. Stator nach einem der Ansprüche 23 bis 31, **dadurch gekennzeichnet, dass** die Nuten (30) eine Umfangsbreite, die dem Durchmesser des Drahtes (60) entspricht, aufweisen, wobei der seitliche Schenkel (711), der die radial am weitesten innen gelegene Position einnimmt, durch Verbreiterung entlang einer Umfangsrichtung derart verformt ist, dass die seitlichen Schenkel (711), die die anderen Positionen einnehmen, im Innern der Nut (30) gehalten werden.

31. Stator nach einem der Ansprüche 23 bis 31, **dadurch gekennzeichnet, dass** die Nuten (30) eine Umfangsbreite, die mindestens gleich zwei Durchmessern des Drahtes (60) ist, und auf einer radial inneren Seite eine Öffnung (31) aufweisen, die auf zwei gegenüberliegenden Seiten teilweise durch zwei axiale Absätze (32) verschlossen ist, wobei die seitlichen Schenkel (711), die die Nuten (30) einnehmen, durch einen flachen Keil (33), der auf den Absätzen (32) auf einer inneren Seite der Nut (30) zur Anlage kommt, im Innern dieser Nut gehalten werden.

32. Stator nach Anspruch 33, **dadurch gekennzeichnet, dass** der Keil (33) aus einem Kunststoffmaterial gebildet ist, das mit einem magnetischen Material, insbesondere Eisen, gefüllt ist.

33. Stator nach einem der vorhergehenden Ansprüche 23 bis 34, **dadurch gekennzeichnet, dass** die Spule sechs Drähte (60) aufweist, die in drei Paare aufgeteilt sind, wobei die Position der Windungen (73) eines Drahtes (60) eines bestimmten Paares aus der Position der Windungen (73) des anderen Drahtes (60) des gleichen Paares durch eine Drehung, die einer Verschiebung um eine Nut (30) entspricht, abgeleitet wird.

34. Stator nach Anspruch 35, **dadurch gekennzeichnet, dass** die Position der Windungen (73) der Drähte (60) eines Paares aus der Position der Windungen (73) der Drähte (60) eines anderen Paares durch eine Drehung, die einer Verschiebung um vier Nuten (30) entspricht, abgeleitet wird.

35. Stator nach Anspruch 35, **dadurch gekennzeichnet, dass** die Position der Windungen (73) der Drähte (60) eines Paares aus der Position der Windungen (73) der Drähte (60) eines anderen Paares durch eine Drehung, die einer Verschiebung um zwei Nuten (30) entspricht, abgeleitet wird abgeleitet wird.

## Claims

1. Method for inserting an undulating coil in a stator of a polyphase electrical rotating machine, such as an alternator or an alternator/starter system of a motor vehicle, the stator (1) comprising an assembly of metal sheets (10) which is perforated centrally and which has an axis of symmetry (20) and axial through-recesses (30) which are arranged in a radially internal face of the assembly of metal sheets (10), the coil comprising a plurality of phase windings (70) which are each constituted by at least one electrically conductive continuous wire (60), each wire being intended to form around the internal face of the assembly of metal sheets (10) a helix comprising a plurality of turns (73) each corresponding to a revolution of the internal face, the method comprising the following steps:
1/ formation of each winding (70), each wire (60) thereof being formed as a succession of notches (71) which are connected by connection segments (72), each notch comprising two lateral branches (711) which face each other and which are each intended to be inserted in a recess (30), and a head branch (712) which connects the two lateral branches (711);
3/ insertion of the turns (73) of each wire in a series of recesses (30) of the stator, the turns (73) of the different wires (60) being radially superimposed in a predetermined order,
**characterised in that** the wires (60) of all the windings (70) are inserted in the recesses (30) at the same time, the turns (73) of the different wires (60) alternating in the predetermined superimposition order, and **in that** the predetermined superimposition order comprises a succession of identical sequences, each sequence being constituted by a turn (73) of each wire (60).

2. Method according to claim 1 or 2, **characterised in that** the recesses (30) provide a plurality of receiving positions which are radially stepped, the lateral branches (711) of the turns (73) which are superimposed from the inner side to the outer side in the predetermined order progressively occupying receiving positions which are radially more external in the recesses (30).

3. Method according to any one of claims 1 to 3, **characterised in that** the lateral branches (711) of the same notch (71) are substantially straight and mutually parallel.

4. Method according to any one of the preceding claims, **characterised in that** the head branches (712) of the notches (71) are curved and form a coil (40) at a first axial side of the stator (1).

5. Method according to claim 5, **characterised in that** the connection segments (72) connect two lateral branches (711) of two adjacent notches (71), respectively, along the wire (60) and are of curved form, those segments forming a coil (40') at a second axial side of the stator (1) opposite the first side.

6. Method according to claim 6, **characterised in that** the head branches (712) and/or the connection segments (72) which are formed in step 1/ have increasing or decreasing heights along the wires (60).

7. Method according to claim 7, **characterised in that** the turns (73) of which the lateral branches (711) are inserted at radially external positions of the bottoms of recesses (30) have head branches (712) and/or connection segments (72) having greater heights in relative terms than the turns (73) of which the lateral branches (711) are inserted at radially internal positions.

8. Method according to any one of claims 6 to 8, **characterised in that** it comprises after the step 3/ a step 4/ of forming coils (40, 40') by inclination of the connection segments (72) and/or the head branches (712) inwards.

9. Method according to any one of claims 6 to 8, **characterised in that** it comprises after the step 3/ a step 4/ of forming coils (40, 40') by inclination of the connection segments (72) and/or the head branches (712) outwards.

10. Method according to any one of claims 1 to 10, **characterised in that** it comprises after the step 1/ a step 1'/ of locally forming the wire (60) in zones (61) of this wire which are intended to intersect with other wires (60) or other zones of the same wire (60) once the windings (70) have been inserted in the stator (1).

11. Method according to claim 11, **characterised in that** the recesses (30) have a circumferential width which corresponds to the diameter of the wire (60), the lateral branch (711) which occupies the radially innermost position being deformed by widening in a circumferential direction so as to maintain the lateral branches (711) which occupy the other positions inside the recess (30).

12. Method according to claim 11, **characterised in that** the recesses (30) have a circumferential width which is equal to at least two diameters of the wire (60) and have at a radially internal side an opening (31) which is partially closed at two opposite sides by two axial graduations (32), the lateral branches (711) which occupy the notches being maintained therein by a flat shim (33) in abutment against the graduations (32) at an internal side of the recess (30).

13. Method according to claim 13, **characterised in that** the shim (33) is constituted by a plastics material charged with a magnetic material, in particular iron.

14. Method according to any one of claims 1 to 14, **characterised in that** it comprises between the steps 1/ and 3/ the following step 2/:
2/ positioning of the wires (60) on a cylindrical insertion tool (80), the turns (73) of the wires (60) being wound around the insertion tool (80) and being radially superimposed from the inner side to the outer side in the said predetermined order.

15. Method according to claim 15, **characterised in that** on the insertion tool (80) the notches (71) extend in respective planes parallel with the axis of symmetry of the insertion tool (80) or weakly inclined in relation to this axis.

16. Method according to claim 16, **characterised in that** the step 3/ of insertion of the windings (70) in the recesses (30) is carried out by moving the insertion tool (80) along the axis of symmetry (20) of the stator (1).

17. Method according to claim 16, **characterised in that** the step 3/ of insertion of the windings (70) in the recesses (30) is carried out by arranging the insertion tool (80) at the centre of the assembly of metal sheets (10) and by forcing the turns (73) radially into the recesses (30) from the inner side to the outer side.

18. Method according to claim 18, **characterised in that** the insertion tool (80) comprises a plurality of radial slots (84) which are provided in a radially external face (85) of the tool (80) and which extend in respective radial planes which are regularly distributed about an axis of symmetry of the tool (80), a plurality of plates (86) which are arranged in the radial slots (84) and means for moving the plates (86) radially from the inner side to the outer side in the radial slots (84), the lateral branches (711) of the turns (73) being inserted in the radial slots (84) in the step 2/ at a radially external side of the plates (86), the plates (86) being moved radially outwards in the step 3/ so as to transfer the lateral branches (711) from the radial slots (84) into the recesses (30).

19. Method according to claim 19, **characterised in that** in the step 1/, after the wires (60) of the windings (70) have been formed as a succession of longitudinally aligned notches (71), the wires (60) of all the windings (70) are stacked flat on a rectilinear longitudinal rack (90) in which there are provided transverse slots (92) which are mutually parallel, the lateral branches (711) of the notches (71) of each wire (60) being inserted in a series of transverse slots (92).

20. Method according to claim 20, **characterised in that** in the step 2/ the stack formed by the wires (60) of the windings (70) is wound from the rack (90) around the insertion tool (80).

21. Method according to any one of the preceding claims, **characterised in that** the coil comprises six wires (60) which are distributed in three pairs, the position of the turns (73) of a wire (60) of a given pair being derived from the position of the turns (73) of the other wire (60) of the same pair by a rotation corresponding to an offset of a recess (30).

22. Stator of a polyphase electrical rotating machine, such as an alternator or an alternator/starter system of a motor vehicle, this stator (1) comprising an assembly of metal sheets (10) which is perforated centrally and which has an axis of symmetry (20), axial through-recesses (30) which are arranged in a radially internal face of the assembly of metal sheets (10), and a coil (50) comprising a plurality of phase windings (70) which are each constituted by at least one electrically conductive continuous wire (60), each wire (60) forming around the internal face of the assembly of metal sheets (10) a helix comprising a plurality of turns (73) each corresponding to a revolution of the internal face;
each wire (60) being formed into a succession of notches (71) which are connected by connection segments (72), each notch comprising two lateral branches (711) each being inserted in a recess (30) and a head branch (712) connecting the two lateral branches (711);
the turns (73) being radially superimposed in a predetermined order;
**characterised in that** the turns (73) alternate in the predetermined superimposition order, and **in that** the predetermined superimposition order comprises a succession of identical sequences, each sequence being constituted by a turn (73) of each wire (60).

23. Stator according to claim 23 or 24, **characterised in that** the recesses (30) provide a plurality of receiving positions which are radially stepped, the lateral branches (711) of the turns (73) which are superimposed from the inner side to the outer side in the predetermined order progressively occupying receiving positions which are radially more external in the recesses (30).

24. Stator according to any one of claims 23 to 25, **characterised in that** the lateral branches (711) of each notch (71) are substantially straight and mutually parallel.

25. Stator according to any one of claims 23 to 26, **characterised in that** the head branches (712) of the notches (71) are curved and form a coil (40) at a first axial side of the stator (1).

26. Stator according to claim 27, **characterised in that** the connection segments (72) connect two lateral branches (711) of two adjacent notches (71), respectively, along the wire (60) and are of curved form, those segments forming a coil (40') at a second axial side of the stator (1) opposite the first side.

27. Stator according to claim 28, **characterised in that** the connection segments (72) and/or the head branches (712) which constitute the coils (40, 40') are inclined inwards.

28. Stator according to claim 28, **characterised in that** the connection segments (72) and/or the head branches (712) which constitute the coils (40, 40') are inclined outwards.

29. Stator according to any one of claims 23 to 30, **characterised in that** the wire (60) is locally formed in zones (61) of this wire which intersect with other wires (60) or other zones of the same wire (60).

30. Stator according to any one of claims 23 to 31, **characterised in that** the recesses (30) have a circumferential width which corresponds to the diameter of the wire (60), the lateral branch (711) which occupies the radially innermost position being deformed by widening in a circumferential direction so as to maintain the lateral branches (711) which occupy the other positions inside the recess (30).

31. Stator according to any one of claims 23 to 31, **characterised in that** the recesses (30) have a circumferential width which is equal to at least two diameters of the wire (60) and have at a radially internal side an opening (31) which is partially closed at two opposite sides by two axial graduations (32), the lateral branches (711) which occupy the recesses (30) being maintained therein by a flat shim (33) in abutment against the graduations (32) at an internal side of the recess (30).

32. Stator according to claim 33, **characterised in that** the shim (33) is constituted by a plastics material charged with a magnetic material, in particular iron.

33. Stator according to any one of claims 23 to 34, **characterised in that** the coil comprises six wires (60) which are distributed in three pairs, the position of the turns (73) of a wire (60) of a given pair being derived from the position of the turns (73) of the other wire (60) of the same pair by a rotation corresponding to an offset of a recess (30).

34. Stator according to claim 35, **characterised in that** the position of the turns (73) of the wires (60) of a pair is derived from the position of the turns (73) of the wires (60) of another pair by a rotation corresponding to an offset of four recesses (30).

35. Stator according to claim 35, **characterised in that** the position of the turns (73) of the wires (60) of a pair is derived is derived from the position of the turns (73) of the wires (60) of another pair by a rotation corresponding to an offset of two recesses (30).
